# EUROPEAN PATENT APPLICATION

(11) **EP 4 807 618 A1**
(43) Date of publication of application: **16.09.2026**
(21) Application number: 26163428.1
(22) Date of filing: 10.03.2026
(51) Int. Cl.: G06F 40/35, G06F 16/34, G10L 15/26

(54) **INFORMATION PROCESSING SYSTEM, INFORMATION PROCESSING METHOD, AND INFORMATION PROCESSING PROGRAM**

(30) Priority: 13.03.2025 JP 2025040113
(71) Applicant: Sharp Kabushiki Kaisha, Sakai City, Osaka 590-8522 (JP)
(72) Inventor: KAWAKAMI, Hiroko, Osaka, 590-8522 (JP); TOMARU, Tomonobu, Osaka, 590-8522 (JP); MINAKI, Yu, Osaka, 590-8522 (JP); OTA, Masato, Osaka, 590-8522 (JP)
(74) Representative: Müller Hoffmann & Partner

(57) **Abstract**

A meeting support apparatus (1) includes: an acquisition processor (112) that acquires a voice uttered by a user; a voice recognition processing unit (113) that converts the voice into text information; a summary generation processing unit (114) that generates, based on the text information, a summary sentence summarizing utterance contents of the user every first predetermined number of characters; and a display processing unit (116) that causes a display screen to display the summary sentence. The summary generation processing unit (114) generates, when the number of characters of first text information converted from a first voice is less than the first predetermined number of characters, a first summary sentence corresponding to the first text information based on the first text information and second text information converted from a second voice uttered before the first voice.

## Description

### INCORPORATION BY REFERENCE

This application is based upon and claims the benefit of priority from the corresponding Japanese Patent Application No. 2025-040113 filed on March 13, 2025, the entire contents of which are incorporated herein by reference.

### BACKGROUND

The present disclosure relates to a technology for converting a user's uttered voice into text and displaying the text.

Conventionally, a technology for converting a user's uttered voice into text information and displaying the text information is known. For example, a meeting system is known that divides meeting text information including text information obtained from utterance contents of meeting participants into sections corresponding to a type selected from among a plurality of types of sections, and generates summary information for each divided meeting text information.

However, in the conventional technology, for example, when text information that does not satisfy a predetermined section exists at the end of a meeting, a problem occurs in that a summary corresponding to the text information is not appropriately generated. Further, in the conventional technology, for example, if a topic of a meeting is switched before reaching the predetermined section, a problem occurs in that a summary in which the contents of the previous and subsequent meetings are mixed is generated based on the text information of the previous topic and the text information of the subsequent topic.

### SUMMARY

An object of the present disclosure is to provide an information processing system, an information processing method, and an information processing program capable of generating a summary sentence that appropriately reflects utterance contents at the end of a meeting and at the time of switching a topic.

The information processing system according to one aspect of the present disclosure includes: an acquisition processing unit that acquires a voice uttered by a user; a conversion processing unit that converts the voice acquired by the acquisition processing unit into text information; a generation processing unit that generates, based on the text information converted by the conversion processing unit, a summary sentence summarizing utterance contents of the user every first predetermined number of characters; and a display processing unit that causes a display screen to display the summary sentence generated by the generation processing unit. The generation processing unit generates, when the number of characters of first text information converted from a first voice is less than the first predetermined number of characters, a first summary sentence corresponding to the first text information based on the first text information and second text information converted from a second voice uttered before the first voice.

The information processing system according to another aspect of the present disclosure includes: an acquisition processing unit that acquires a voice uttered by a user; a conversion processing unit that converts the voice acquired by the acquisition processing unit into text information; a generation processing unit that generates, based on the text information converted by the conversion processing unit, a summary sentence summarizing utterance contents of the user every first predetermined number of characters; and a display processing unit that causes a display screen to display the summary sentence generated by the generation processing unit. The information processing system includes: (1) a first summary generation process of generating, when the number of characters of first text information converted from a first voice is less than the first predetermined number of characters, a first summary sentence corresponding to the first text information based on the first text information and second text information converted from a second voice uttered before the first voice; and (2) a second summary generation process of generating, when the number of characters of the first text information is less than the first predetermined number of characters, the first summary sentence using a summary generation model that is different from a summary generation model corresponding to the first predetermined number of characters. The generation processing unit selects and executes the first summary generation process or the second summary generation process based on at least one of the number of characters, a keyword, and a degree of importance of the first text information.

The information processing system according to another aspect of the present disclosure includes: an acquisition processing unit that acquires a voice uttered by a user; a conversion processing unit that converts the voice acquired by the acquisition processing unit into text information; a generation processing unit that generates, based on the text information converted by the conversion processing unit, a summary sentence summarizing utterance contents of the user every predetermined time; and a display processing unit that causes a display screen to display the summary sentence generated by the generation processing unit. The generation processing unit generates, when an utterance time of a first voice is less than the predetermined time, a summary sentence corresponding to first text information of the utterance time based on the first text information and second text information converted from a second voice uttered before the first voice.

In an information processing method according to another aspect of the present disclosure, one or more processors execute: acquiring a voice uttered by a user; converting the voice into text information; generating, based on the text information, a summary sentence summarizing utterance contents of the user every first predetermined number of characters; causing a display screen to display the summary sentence; and generating, when the number of characters of first text information converted from a first voice is less than the first predetermined number of characters, a first summary sentence corresponding to the first text information based on the first text information and second text information converted from a second voice uttered before the first voice.

In an information processing program according to another aspect of the present disclosure, the information processing program causes one or more processors to execute: acquiring a voice uttered by a user; converting the voice into text information; generating, based on the text information, a summary sentence summarizing utterance contents of the user every first predetermined number of characters; causing a display screen to display the summary sentence; and generating, when the number of characters of first text information converted from a first voice is less than the first predetermined number of characters, a first summary sentence corresponding to the first text information based on the first text information and second text information converted from a second voice uttered before the first voice.

According to the present disclosure, it is possible to provide an information processing system, an information processing method, and an information processing program capable of generating a summary sentence that appropriately reflects utterance contents at the end of a meeting and at the time of switching a topic.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a diagram illustrating an application example of a meeting support system according to an embodiment of the present disclosure.
FIG. 2 is a block diagram illustrating a configuration of the meeting support system according to the embodiment of the present disclosure.
FIG. 3 is a diagram illustrating an example of device information used in the meeting support system according to the embodiment of the present disclosure.
FIG. 4 is a diagram illustrating an example of utterance information used in the meeting support system according to the embodiment of the present disclosure.
FIG. 5 is a diagram illustrating an example of summary information used in the meeting support system according to the embodiment of the present disclosure.
FIG. 6 is a diagram illustrating an example of topic information used in the meeting support system according to the embodiment of the present disclosure.
FIG. 7A is a diagram illustrating an example of a setting screen displayed in the meeting support system according to the embodiment of the present disclosure.
FIG. 7B is a diagram illustrating an example of a setting screen displayed in the meeting support system according to the embodiment of the present disclosure.
FIG. 8 is a diagram illustrating an example of a meeting screen displayed in the meeting support system according to the embodiment of the present disclosure.
FIG. 9 is a diagram illustrating an example of a meeting screen displayed in the meeting support system according to the embodiment of the present disclosure.
FIG. 10 is a diagram illustrating an example of a meeting screen displayed in the meeting support system according to the embodiment of the present disclosure.
FIG. 11 is a diagram illustrating an example of a meeting screen displayed in the meeting support system according to the embodiment of the present disclosure.
FIG. 12 is a diagram illustrating an example of a meeting screen displayed in the meeting support system according to the embodiment of the present disclosure.
FIG. 13 is a diagram illustrating an example of a meeting screen displayed in the meeting support system according to the embodiment of the present disclosure.
FIG. 14 is a diagram illustrating an example of a meeting screen displayed in the meeting support system according to the embodiment of the present disclosure.
FIG. 15 is a diagram illustrating an example of a meeting screen displayed in the meeting support system according to the embodiment of the present disclosure.
FIG. 16 is a diagram illustrating an example of a meeting screen displayed in the meeting support system according to the embodiment of the present disclosure.
FIG. 17 is a block diagram illustrating another configuration of a meeting support apparatus according to the embodiment of the present disclosure.
FIG. 18 is a flowchart for explaining an example of a procedure of a meeting support process executed in the meeting support apparatus according to the embodiment of the present disclosure.
FIG. 19 is a flowchart for explaining an example of a procedure of a meeting support process executed in the meeting support apparatus according to the embodiment of the present disclosure.
FIG. 20 is a diagram illustrating an example of a meeting screen displayed in a conventional configuration.
FIG. 21 is a schematic diagram illustrating an example of a summary generation process in the conventional configuration.
FIG. 22 is a schematic diagram illustrating an example of a summary generation process according to a first example of the present disclosure.
FIG. 23 is a diagram illustrating an example of a meeting screen displayed in the meeting support system according to the first example of the present disclosure.
FIG. 24 is a flowchart for explaining an example of a procedure of a summary generation process executed in the meeting support apparatus according to the first example of the present disclosure.
FIG. 25 is a schematic diagram illustrating an example of a summary generation process according to a second example of the present disclosure.
FIG. 26 is a diagram illustrating an example of a meeting screen displayed in the meeting support system according to the second example of the present disclosure.
FIG. 27 is a flowchart for explaining an example of a procedure of a summary generation process executed in the meeting support apparatus according to the second example of the present disclosure.
FIG. 28 is a schematic diagram illustrating an example of a summary generation process according to a third example of the present disclosure.
FIG. 29 is a diagram illustrating an example of a meeting screen displayed in the meeting support system according to the third example of the present disclosure.
FIG. 30 is a flowchart for explaining an example of a procedure of a summary generation process executed in the meeting support apparatus according to the third example of the present disclosure.
FIG. 31 is a schematic diagram illustrating an example of a summary generation process according to another embodiment of the present disclosure.

### DETAILED DESCRIPTION

Embodiments of the present disclosure will be described below with reference to the accompanying drawings. Note that the following embodiments are examples embodying the present disclosure and do not have a character of limiting the technical scope of the present disclosure.

The information processing system according to the present disclosure can be applied, for example, to a case where a plurality of users in the same space (e.g., a meeting room) each use an audio device including a microphone and a speaker to have a conversation (meeting) with users in another space. The information processing system can also be applied to a case where a plurality of users have a conversation in one space using respective audio devices. Furthermore, the information processing system can also be applied to a case where one user in one space uses an audio device to have a conversation with a user in another space.

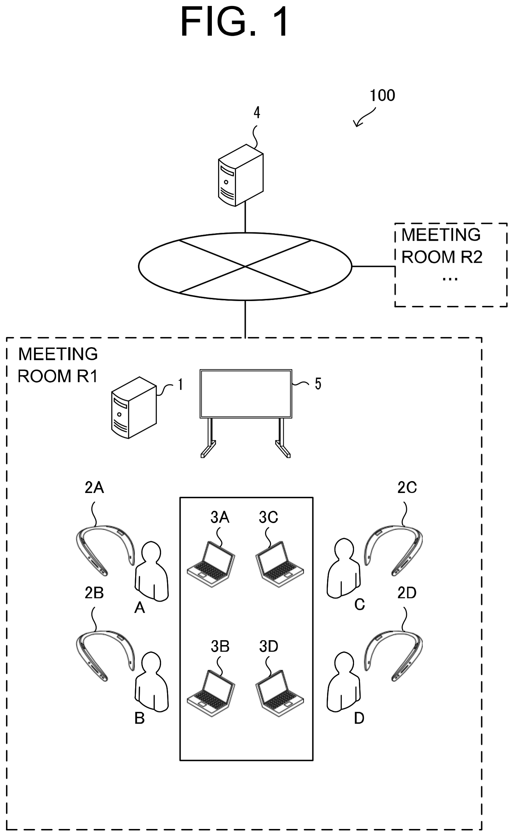

FIG. 1 illustrates an application example of a meeting support system 100 according to the present embodiment. As shown in FIG. 1, users A to D participate in a meeting in a meeting room R1, and other users (not shown) participate in the meeting in a meeting room R2. Users A to D have a conversation using neckband-type audio devices 2A to 2D that can be worn on the neck, respectively. A user in the meeting room R2 may use the audio device 2 or may use one microphone-speaker device installed in the meeting room R2. Although FIG. 1 shows an example in which each of users A to D uses the audio device 2, the present disclosure is not limited thereto, and only some users may use the audio device 2. The meeting support system 100 is an example of the information processing system and the voice processing system of the present disclosure.

Each audio device 2 in the meeting room R1 is wirelessly connected (connected by Bluetooth (registered trademark)) to a meeting support apparatus 1. Voice input to the microphone of each audio device 2 is input to the meeting support apparatus 1 and transmitted from the meeting support apparatus 1 to a meeting terminal 3. A meeting application of a meeting server 4 transmits the voice received by the meeting terminal 3 to the meeting room R2. Thus, the voice in the meeting room R1 is output (reproduced) from the speaker of the audio device 2 (or microphone-speaker device) of the user in the meeting room R2. Similarly, voice input to the microphone of the audio device 2 (or microphone-speaker device) in the meeting room R2 is reproduced from the speaker of the audio device 2 of each user in the meeting room R1 by the meeting application of the meeting server 4.

In this way, the meeting support system 100 is a system that enables a plurality of users to have a conversation in the same space (meeting room R1 in FIG. 1) using individual audio devices 2. The meeting support system 100 may include a display device 5 usable in the meeting. On the display device 5, the meeting application displays meeting information such as camera images of meeting participants and meeting materials, or displays recognition results (text information) obtained by converting voice into text through voice recognition processing.

As shown in FIG. 1, the meeting support system 100 includes the meeting support apparatus 1, the audio device 2, the meeting terminal 3, and the meeting server 4. The audio device 2 is a wireless connection type acoustic device equipped with a microphone and a speaker. The audio device 2 may include functions of, for example, an AI speaker or a smart speaker. The meeting support system 100 is a system that includes a plurality of audio devices 2 and transmits and receives voice data of users' uttered voices to and from the plurality of audio devices 2. Each audio device 2 may be the same type of acoustic device or a different type of acoustic device. For example, the plurality of audio devices 2 may include a wireless connection type acoustic device and a wired connection type acoustic device. Further, the plurality of audio devices 2 may include a neckband-type acoustic device, a headset-type acoustic device, and a stationary acoustic device.

The meeting support apparatus 1 controls the voice (input voice, output voice, etc.) of the audio device 2, and executes a process of transmitting and receiving voice to and from a plurality of audio devices 2 when, for example, a meeting is started in a meeting room. For example, the meeting support apparatus 1 controls a plurality of audio devices 2 arranged in the same space. Further, the meeting support apparatus 1 accumulates voice acquired from the audio device 2 as recording voice, and executes a process of converting the acquired voice into text (voice recognition processing). The meeting support apparatus 1 alone may constitute the information processing system and the voice processing system of the present disclosure.

The information processing system of the present disclosure may also include functions for providing various services such as a meeting service, a subtitle (transcription) service using voice recognition, a translation service, and a minutes service. In the present embodiment, the meeting support system 100 includes the meeting server 4 that provides a meeting service. The meeting server 4 provides an online meeting service of a meeting application, which is one type of general-purpose software. For example, the meeting application is installed in the meeting terminal 3. By starting up the meeting terminal 3 and logging in, it becomes possible to conduct an online meeting (e.g., an online meeting in the meeting room R1 and the meeting room R2) using the meeting application.

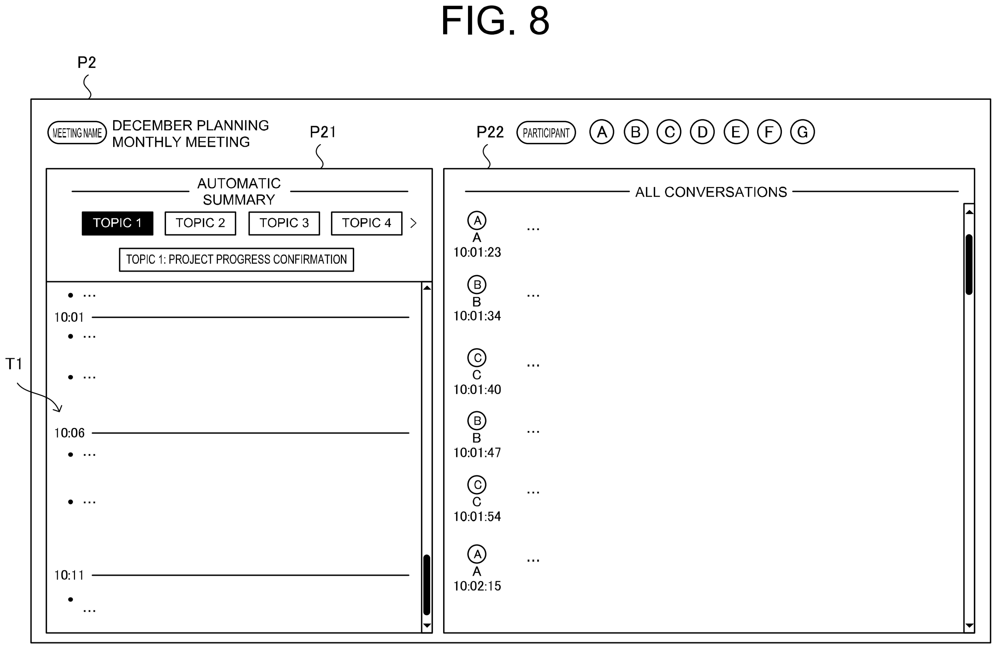

The meeting terminal 3 may be, for example, a user terminal used by a representative user (organizer) who organizes the meeting among users participating in the meeting. For example, a user terminal 3A of user A, who is the organizer, functions as the meeting terminal 3. In this case, users B to D can view a meeting screen P2 (FIG. 8, etc.) by starting the meeting application on user terminals 3B to 3D.

### Meeting Support Apparatus 1

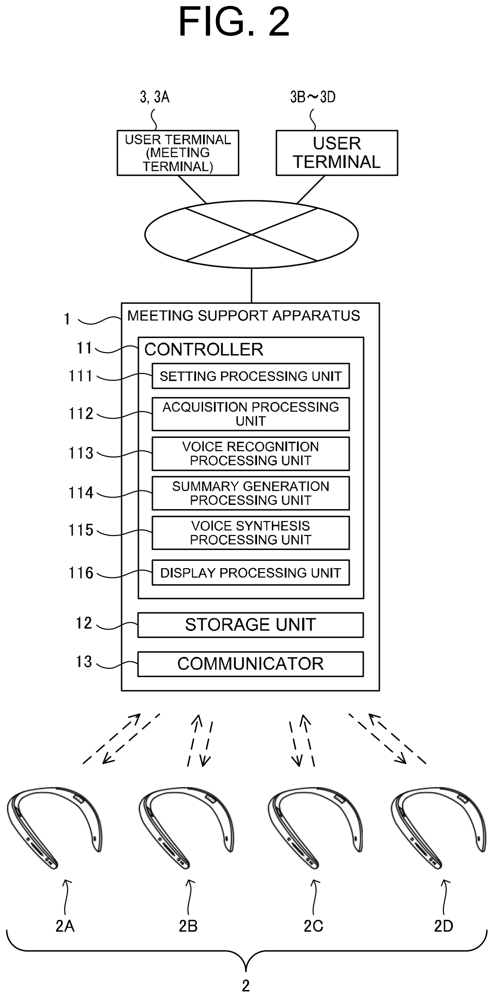

As shown in FIG. 2, the meeting support apparatus 1 is an apparatus including a controller 11, a storage unit 12, a communicator 13, and the like. For example, the meeting support apparatus 1 is connected to a plurality of audio devices 2 and includes a function of mixing or splitting voice input from the plurality of audio devices 2 or the meeting terminal 3, and a voice recognition function of converting input voice into text information.

The communicator 13 connects the meeting support apparatus 1 to a communication network by wire or wireless, and is a communicator for executing data communication according to a predetermined communication protocol with external devices such as the audio device 2, the meeting terminal 3, and the display device 5 via the communication network. For example, the communicator 13 executes pairing processing using the Bluetooth method to wirelessly connect with each audio device 2.

The storage unit 12 is a non-volatile storage unit such as an HDD (Hard Disk Drive), an SSD (Solid State Drive), or a flash memory that stores various types of information. The storage unit 12 stores data such as device information D1 related to the audio device 2, utterance information D2 related to utterance content, summary information D3 related to a summary sentence, and topic information D4 related to a topic.

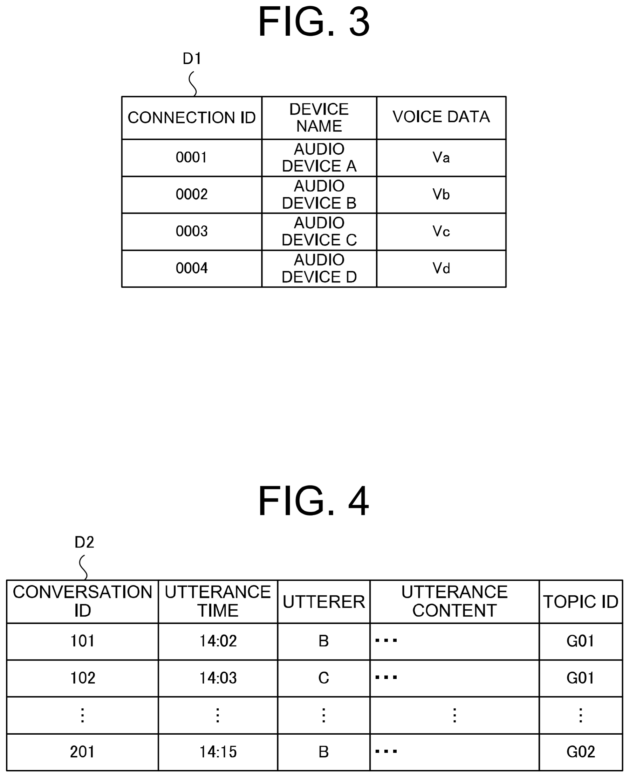

FIG. 3 illustrates an example of the device information D1. In the device information D1, information such as a connection ID, a device name, and voice data is registered. The connection ID is identification information (device information) used when connecting the audio device 2, and is, for example, a Bluetooth address. The device name is a device name of the audio device 2. The voice data is data of voice (uttered voice) acquired from the audio device 2. In this way, the device information D1 stores voice data for each device. Each piece of voice data is stored with identification information of the device (audio device 2) added thereto.

FIG. 4 illustrates an example of the utterance information D2. In the utterance information D2, information such as a conversation ID, an utterance time, an utterer, utterance content, and a topic ID is registered. The conversation ID is identification information of utterance content of a user (utterer). The utterance time is a time when the user uttered. The utterer is a name or identification information (user ID) of the user. The utterance content is character information obtained by converting voice uttered by the user into text information. The topic ID is identification information of a topic of the meeting. When a meeting regarding a predetermined topic is started, the controller 11 registers each piece of information in the utterance information D2 based on the uttered voice of the user acquired from the audio device 2.

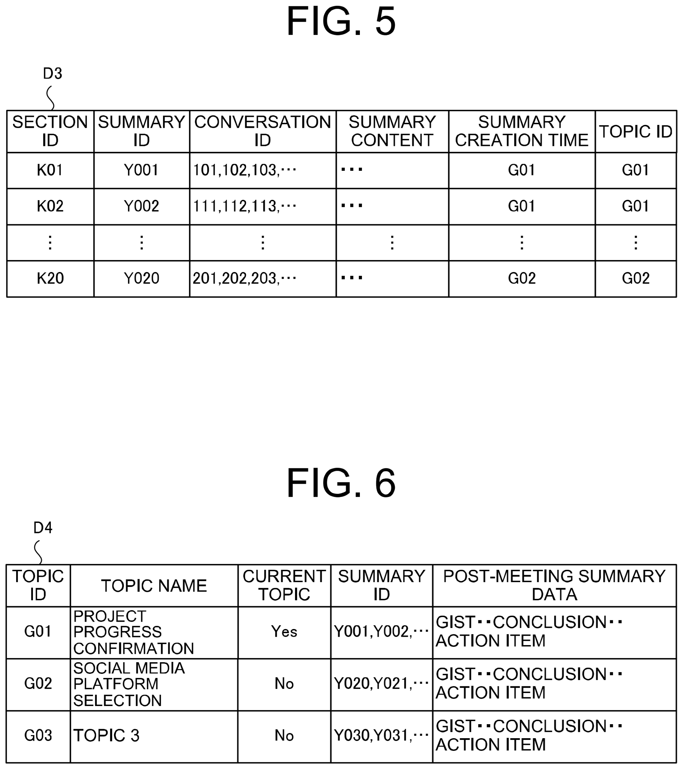

FIG. 5 illustrates an example of the summary information D3. In the summary information D3, information such as a section ID, a summary ID, a conversation ID, summary content, a summary creation time, and a topic ID is registered. The section ID is identification information capable of identifying a section divided according to a predetermined time or a predetermined number of characters (details will be described later). The summary ID is identification information capable of identifying a summary sentence (details will be described later) generated based on text information converted from voice. The summary content is the content of the summary sentence, and the summary creation time is the time when the summary sentence was generated. The controller 11 generates a summary sentence based on the user's uttered voice during the meeting and registers each piece of information in the summary information D3.

FIG. 6 illustrates an example of the topic information D4. In the topic information D4, information such as a topic ID, a topic name, a current topic, a summary ID, and post-meeting summary data is registered. The topic name is a name of the topic. The current topic is information indicating whether or not the topic is currently under conversation (during the meeting). FIG. 6 shows that a meeting is currently being held regarding a topic "Project progress confirmation." The post-meeting summary data indicates data generated after the meeting ends (minutes data), and includes content related to minutes such as, for example, a gist, a conclusion, and action items (future policy, etc.). For example, when a meeting regarding a topic specified by the organizer of the meeting is started, the controller 11 registers each piece of information in the topic information D4 based on the uttered voice of the user acquired from the audio device 2, and registers the post-meeting summary data in the topic information D4 when the meeting ends.

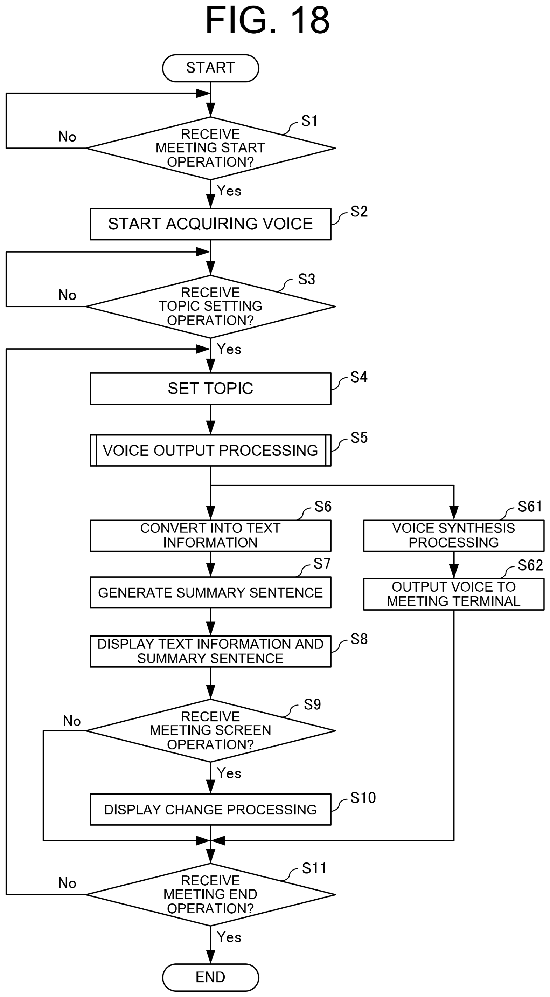

Further, the storage unit 12 stores a control program such as a meeting support program (an example of the information processing program of the present disclosure) for causing the controller 11 to execute a meeting support process (see FIG. 18) described later. For example, the meeting support program may be non-transitorily recorded in a computer-readable recording medium such as a CD or a DVD, read by a reading device (not shown) such as a CD drive or a DVD drive provided in the meeting support apparatus 1, and stored in the storage unit 12.

The controller 11 includes control equipment such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (working area) for various processes executed by the CPU. The controller 11 controls the meeting support apparatus 1 by causing the CPU to execute various control programs stored in advance in the ROM or the storage unit 12.

Specifically, as shown in FIG. 2, the controller 11 includes various processing units such as a setting processing unit 111, an acquisition processing unit 112, a voice recognition processing unit 113, a summary generation processing unit 114, a voice synthesis processing unit 115, and a display processing unit 116. The controller 11 functions as the various processing units by causing the CPU to execute various processes according to the control program. Some or all of the processing units may be configured by electronic circuits. The control program may be a program for causing a plurality of processors to function as the processing units.

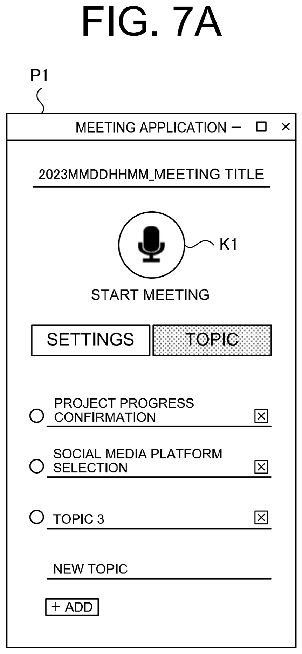

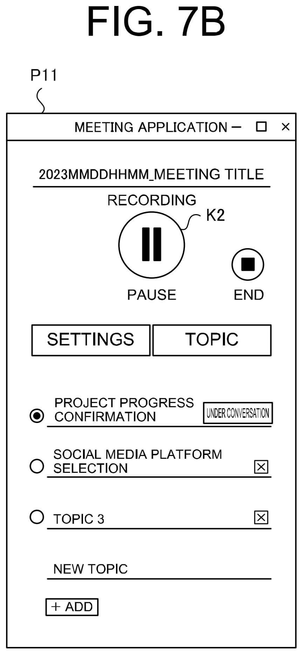

The setting processing unit 111 sets a topic of a conversation (meeting). Specifically, the setting processing unit 111 receives, from a user (such as an organizer of the meeting), an operation of registering a new topic, an operation of selecting a topic, and an operation of changing a topic currently under conversation. For example, user A, who is the meeting organizer, starts the meeting application on the user terminal 3A (meeting terminal 3) to display a setting screen P1 (see FIG. 7A). User A can register one or more topics by selecting a "Topic" column on the setting screen P1. User A also selects one topic from a plurality of registered topics on the setting screen P1. FIG. 7B shows an example of a setting screen P11 after the meeting is started (during the meeting). In FIG. 7B, identification information ("Under conversation") indicating a topic currently under conversation (e.g., "Project progress confirmation") is displayed. When changing the topic, user A selects another topic on the setting screen P1. User A can also select users participating in the meeting or select the audio device 2 used in the meeting by selecting a "Settings" column on the setting screen P1.

When setting a topic in response to a user operation, the setting processing unit 111 registers identification information (topic ID) and a topic name of the topic in the topic information D4 (see FIG. 6). When the meeting is started, the setting processing unit 111 registers information ("Yes") capable of identifying the topic of the meeting (here, "Project progress confirmation") in the topic information D4.

The setting processing unit 111 may allow only users having a predetermined authority to perform a topic setting operation and a meeting start operation. As another embodiment, the setting processing unit 111 may automatically set or change a topic by analyzing user's utterance content.

The acquisition processing unit 112 acquires a voice uttered by a user. Specifically, when the meeting starts and a user utters, the acquisition processing unit 112 acquires the uttered voice input to the microphone of the audio device 2 of the user. The acquisition processing unit 112 also acquires time information corresponding to the utterance time of the user's uttered voice. For example, the acquisition processing unit 112 acquires a time when the user's uttered voice was input to the microphone of the audio device 2, or a time when the uttered voice was acquired.

Upon acquiring voice from the audio device 2, the acquisition processing unit 112 associates the voice data with identification information (connection ID, device name, etc.) of the audio device 2 and stores it in the device information D1 (see FIG. 3). In the example shown in FIG. 1, the acquisition processing unit 112 acquires uttered voices of users A to D in the meeting room R1 from the audio devices 2, associates each piece of voice data with a connection ID, and stores it in the device information D1.

The voice recognition processing unit 113 executes voice recognition processing for converting voice into text based on the voice acquired by the acquisition processing unit 112. The voice recognition processing unit 113 converts voice into text information using a predetermined voice recognition engine (learned model). The voice recognition engine is generated by, for example, learning various types of voice data (teacher data). The meeting support apparatus 1 is equipped with the voice recognition engine. The voice recognition processing unit 113 may execute voice processing such as echo cancellation, noise cancellation, and gain adjustment on the voice acquired by the acquisition processing unit 112.

The voice recognition processing unit 113 also registers the text information as utterance content in the utterance information D2 (see FIG. 4). The voice recognition processing unit 113 registers identification information (conversation ID) of the utterance content, the time information (utterance time), and identification information (name) of the utterer in association with the utterance content. The voice recognition processing unit 113 also registers identification information (topic ID) of a topic corresponding to the utterance content in association with the utterance content. The voice recognition processing unit 113 also registers the topic ID of the topic set by the setting processing unit 111 in association with the utterance content. The voice recognition processing unit 113 is an example of the conversion processing unit of the present disclosure.

The summary generation processing unit 114 generates a short summary sentence summarizing utterance content of a user based on the text information converted by the voice recognition processing unit 113. The summary generation processing unit 114 generates a summary sentence from the text information using a predetermined summary generation engine (learned model). The summary generation engine is generated by, for example, learning various types of conversation data and summary data (teacher data). The meeting support apparatus 1 is equipped with the summary generation engine. For example, the summary generation processing unit 114 generates one summary sentence from a plurality of pieces of text information corresponding to uttered voices of one or more users.

The summary generation processing unit 114 also generates a summary sentence for each predetermined section. Specifically, the summary generation processing unit 114 generates one or more summary sentences every predetermined time (e.g., 5 minutes) or every predetermined number of characters (e.g., 1500 characters) of the text information.

The summary generation processing unit 114 also registers the summary sentence as summary content in the summary information D3 (see FIG. 5). The summary generation processing unit 114 registers identification information of the section (section ID), identification information of the summary sentence (summary ID), and identification information of a conversation corresponding to the text information (conversation ID) in association with the summary content. The summary generation processing unit 114 also registers a time when the summary sentence was generated in association with the summary content. The summary generation processing unit 114 also registers the topic ID of the topic set by the setting processing unit 111 in association with the summary content. In the example shown in FIG. 5, conversations corresponding to a plurality of pieces of text information with conversation IDs "101," "102," "103," ... are conducted in a section with section ID "K01," and one summary (summary ID "Y001") is generated from the content of these plurality of conversations. The number of summary sentences generated in one section may be one or plural.

The summary generation processing unit 114 also registers the summary ID in the topic information D4 (see FIG. 6). When a plurality of summary sentences are generated for one topic, the summary generation processing unit 114 registers a plurality of summary IDs corresponding to the respective summary sentences in association with the topic (topic ID) in the topic information D4. The summary generation processing unit 114 is an example of the generation processing unit of the present disclosure.

The voice synthesis processing unit 115 synthesizes the voice acquired by the acquisition processing unit 112. The voice synthesis processing unit 115 also outputs the synthesized voice to the meeting terminal 3 (e.g., user terminal 3A) in the meeting room R1. The meeting application of the meeting server 4 transmits the voice received by the meeting terminal 3 in the meeting room R1 to the meeting terminal 3 in the meeting room R2.

The display processing unit 116 causes a display screen to display various types of information corresponding to the meeting application. Specifically, on the meeting screen P2, the display processing unit 116 displays the text information converted by the voice recognition processing unit 113 and the summary sentence corresponding to the topic generated by the summary generation processing unit 114 side by side. For example, as shown in FIG. 8, on the user terminal 3, the display processing unit 116 displays the text information under conversation in a conversation display area P22 of the meeting screen P2, and displays the summary sentence generated for each predetermined section in a summary display area P21 of the meeting screen P2. In the conversation display area P22, the display processing unit 116 sequentially adds and displays text information in real time while scrolling the screen.

In the conversation display area P22, the display processing unit 116 also displays identification information (user name, user icon, etc.) of the user of the uttered voice corresponding to the text information and the time information (utterance time) in association with the text information (utterance content).

In the summary display area P21, the display processing unit 116 also displays identification information capable of identifying the section (e.g., summary creation time T1) in association with the summary sentence. For example, when the summary generation processing unit 114 generates a summary sentence every time 5 minutes elapse, the display processing unit 116 displays times at 5-minute intervals in the summary display area P21 (see FIG. 8).

In the summary display area P21, each of a plurality of bulleted sentences included in one section (e.g., a section from 10:06 to 10:11) is a summary sentence. As another embodiment, the summary generation processing unit 114 may generate each bulleted sentence as a key point and generate one summary sentence summarizing a plurality of key points.

In the summary display area P21, the display processing unit 116 also displays a plurality of topics in a selectable manner, and displays a topic selected by a user in an identifiable manner. When no topic is selected in the summary display area P21, the display processing unit 116 displays a summary sentence corresponding to a topic currently under conversation. Thus, on the meeting screen P2, text information of a conversation regarding the topic currently under conversation and a summary sentence regarding the topic are displayed side by side. A user can collectively check the content and summary under conversation on one meeting screen P2.

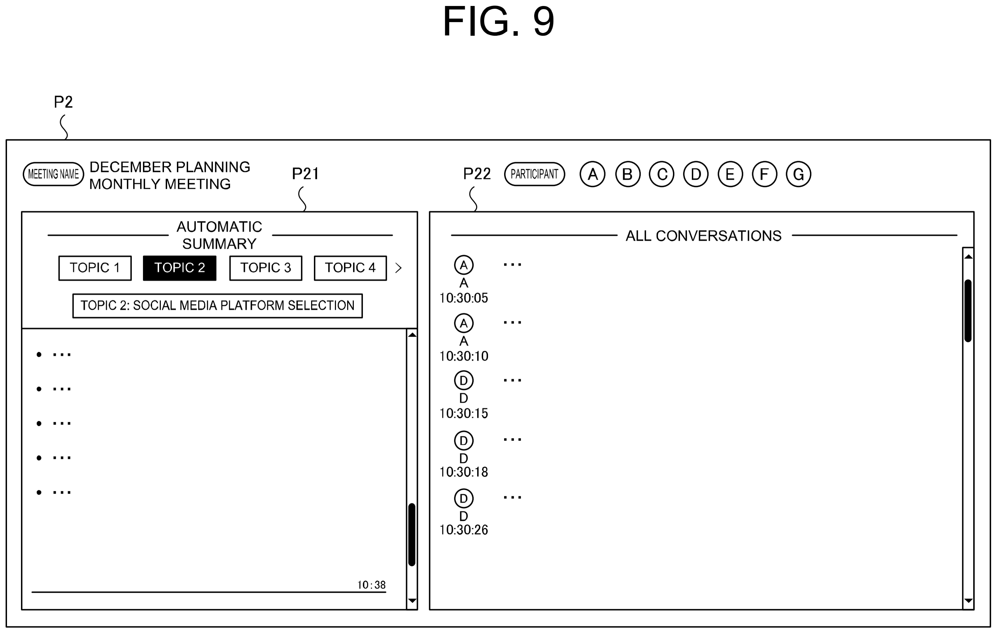

Here, when the meeting organizer (user A) changes the topic from Topic 1 ("Project progress confirmation") to Topic 2 ("Social media platform selection") on the setting screen P1 (see FIG. 7A), the display processing unit 116 displays text information currently under conversation regarding Topic 2 in the conversation display area P22 and displays a summary sentence corresponding to Topic 2 in the summary display area P21 as shown in FIG. 9.

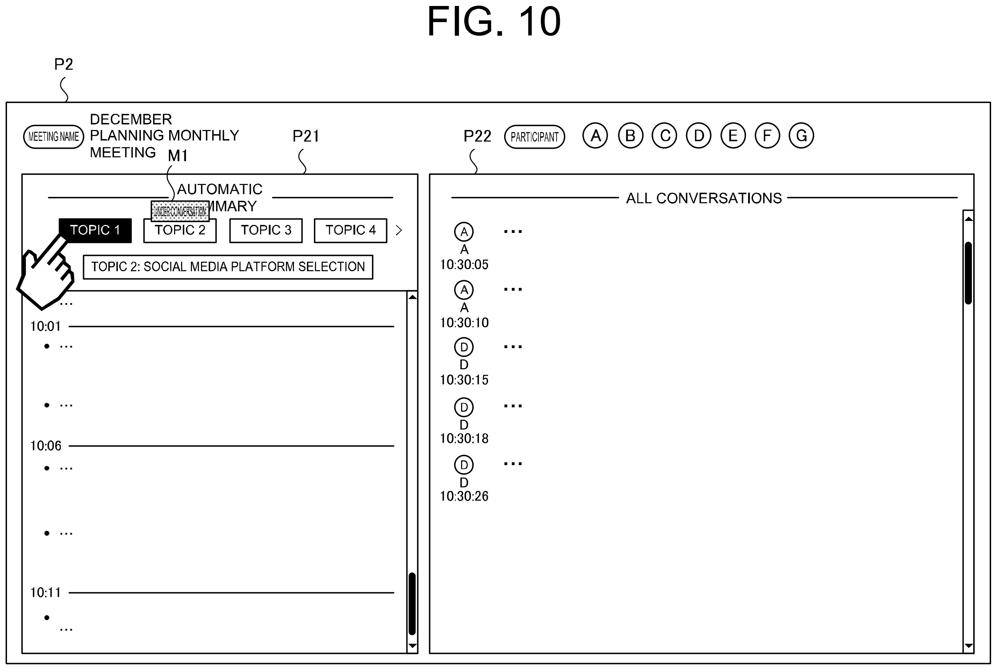

Furthermore, for example, when the topic currently under conversation is "Topic 2" (see FIG. 9) and a user (e.g., users B to D) selects "Topic 1" in the summary display area P21, the display processing unit 116 displays a summary sentence corresponding to Topic 1 in the summary display area P21 as shown in FIG. 10. Thus, on the meeting screen P2, text information regarding Topic 2 currently under conversation and a summary sentence regarding Topic 1 selected by the user are displayed side by side. In this case, the display processing unit 116 also displays an identification mark M1 capable of identifying Topic 2 currently under conversation in association with Topic 2 so that the user can recognize Topic 2 currently under conversation in the summary display area P21. As another embodiment, the display processing unit 116 may display the icon of Topic 2 currently under conversation and the icon of Topic 1 selected by the user in different display modes in the summary display area P21.

In this way, when the topic of the meeting switches from "Topic 1" (see FIG. 8) to "Topic 2" (see FIG. 9) and a user wants to check the content of the previous "Topic 1," the user can check the summary sentence of Topic 1 by selecting "Topic 1" in the summary display area P21 during the conversation of Topic 2 (see FIG. 10). A user can collectively check the summary sentence of a past topic and the conversation content currently under conversation on one meeting screen P2.

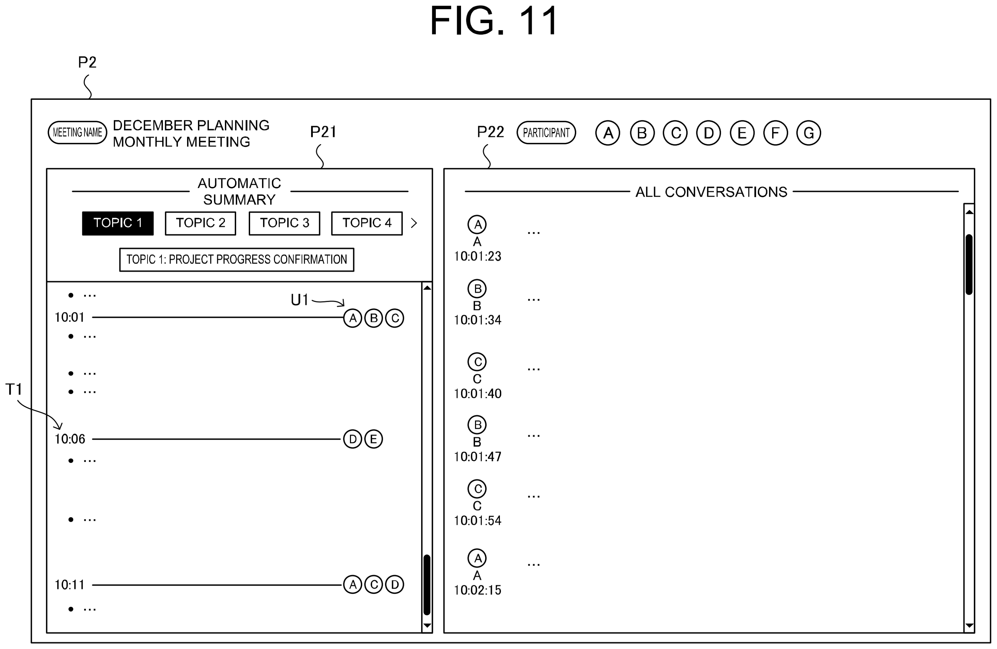

The display processing unit 116 may also display user identification information capable of identifying a user who uttered within a predetermined section in association with a summary sentence corresponding to the predetermined section. For example, as shown in FIG. 11, the display processing unit 116 displays user icons U1 capable of identifying users ("A," "B," "C") who uttered in a section from 10:01 to 10:06 in association with the summary sentence corresponding to the section. Thus, a user can grasp the user who uttered the content (text information) that is the basis of the summary sentence on the meeting screen P2.

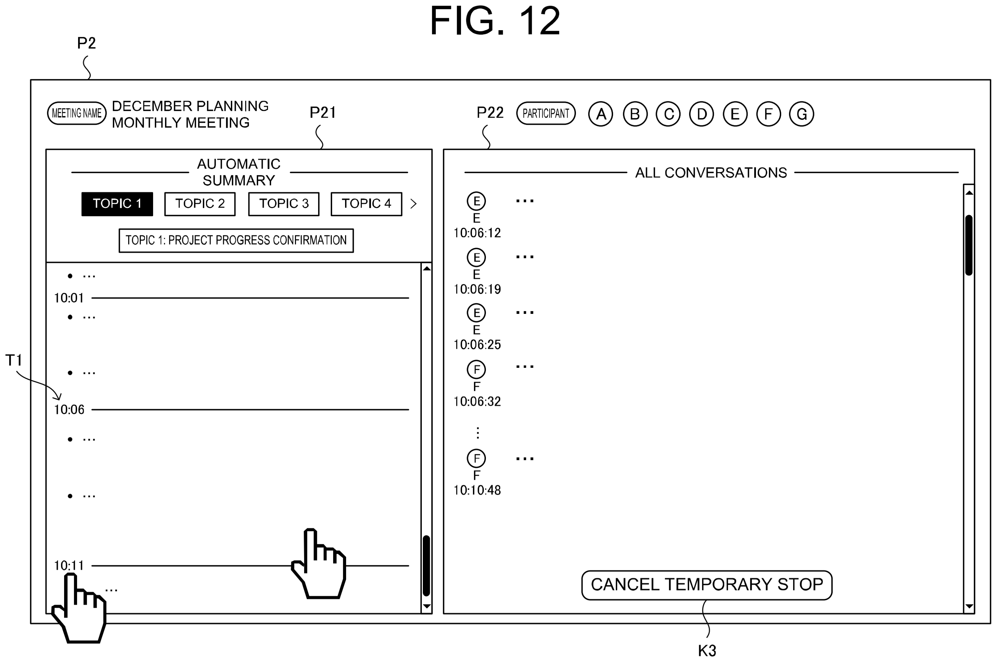

Here, the display processing unit 116 may execute a process of changing display content of each display area in response to a user operation on the summary display area P21 and the conversation display area P22 of the meeting screen P2. For example, as shown in FIG. 12, when a user presses "10:11" which is the creation time of a summary sentence in a section from 10:06 to 10:11 in the summary display area P21, or when a user presses the summary sentence of the section, the display processing unit 116 displays text information that is the basis of the summary sentence with priority in the conversation display area P22. In this case, the display processing unit 116 temporarily stops the display process of text information of uttered voice acquired in real time, and displays the text information that is the basis of the summary sentence selected by the user in a fixed manner. Thus, on the meeting screen P2 where the summary sentence is displayed, a user can select a summary sentence of interest during a conversation and check the utterance content that is the basis of the summary sentence.

The display processing unit 116 may also display a cancel button K3 for canceling the temporary stop state on the meeting screen P2. When the user presses the cancel button K3, the display processing unit 116 resumes the display process of text information of the uttered voice currently under conversation acquired in real time in the conversation display area P22.

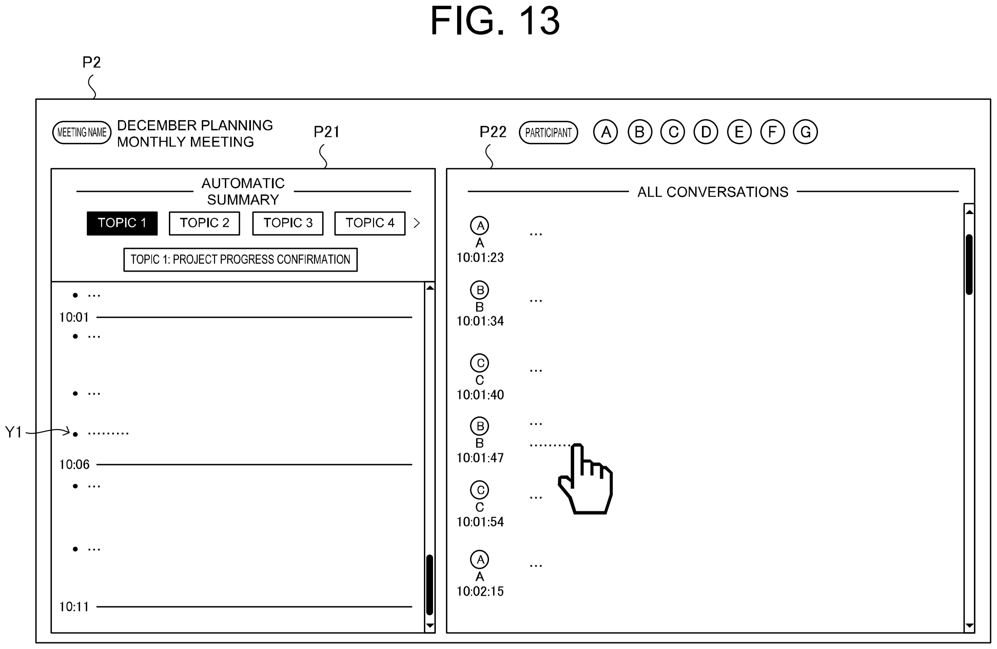

As another embodiment, for example, as shown in FIG. 13, when a user presses text information (conversation content) in the conversation display area P22, the display processing unit 116 may additionally display the text information as a summary sentence Y1 in the summary display area P21. For example, when a user determines that there is important information among a plurality of pieces of text information displayed in the conversation display area P22, the user selects the text information. Thus, the display processing unit 116 additionally displays the selected text information as the summary sentence Y1 in the summary display area P21. As another embodiment, the summary generation processing unit 114 may regenerate a summary sentence by adding the text information selected by the user. In this case, the summary generation processing unit 114 may regenerate a summary sentence by assigning weight to the text information selected by the user. Thus, a user can correct a summary sentence as intended. The operation of selecting the text information may be, for example, an operation (drag-and-drop operation) in which the user moves the text information from the conversation display area P22 to the summary display area P21.

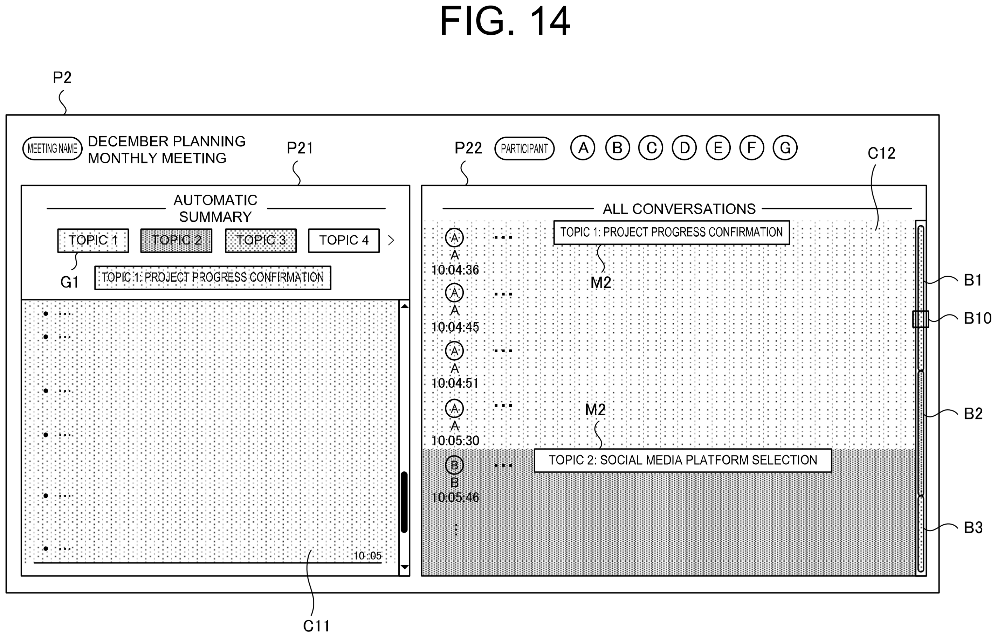

The display processing unit 116 may also vary display modes of the summary sentence and the text information for each topic. For example, as shown in FIG. 14, in the summary display area P21, the display processing unit 116 displays a background image of a topic icon G1 and a background image C11 of a summary sentence in a mode corresponding to the topic, and in the conversation display area P22, displays a background image C12 of text information in a mode corresponding to the topic. For example, as shown in FIG. 14, the display processing unit 116 displays the topic icon G1 of Topic 1, the summary sentence of Topic 1, and the text information that is the basis of the summary sentence of Topic 1 in the same display mode (e.g., same background image).

In the conversation display area P22, the display processing unit 116 also displays scroll bars B1 to B3 corresponding to Topics 1 to 3, respectively, in a mode corresponding to the topic, and displays each scroll bar with a length corresponding to a ratio of conversation time related to the topic. In the conversation display area P22, the display processing unit 116 also displays a position mark B10 indicating a position of text information being displayed on the scroll bar. Thus, a user can grasp the length of the conversation corresponding to each topic, the position of the conversation content currently being displayed, and the like.

As shown in FIG. 14, the display processing unit 116 may also display an identification mark M2 capable of identifying a topic in the conversation display area P22.

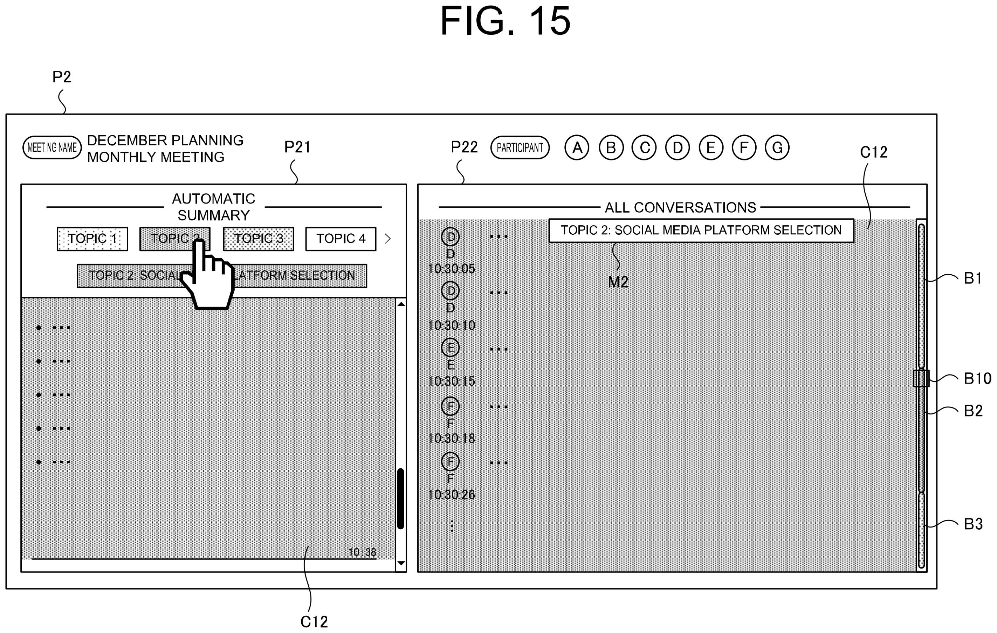

In the configuration shown in FIG. 14, for example, when a user selects a topic icon G1 ("Topic 2"), the display processing unit 116 displays the summary sentence of Topic 2 in the summary display area P21 and may display, in the conversation display area P22, text information corresponding to the conversation of Topic 2 by searching from the beginning as shown in FIG. 15. Here, the position mark B10 is displayed at the beginning of the scroll bar B2 corresponding to Topic 2.

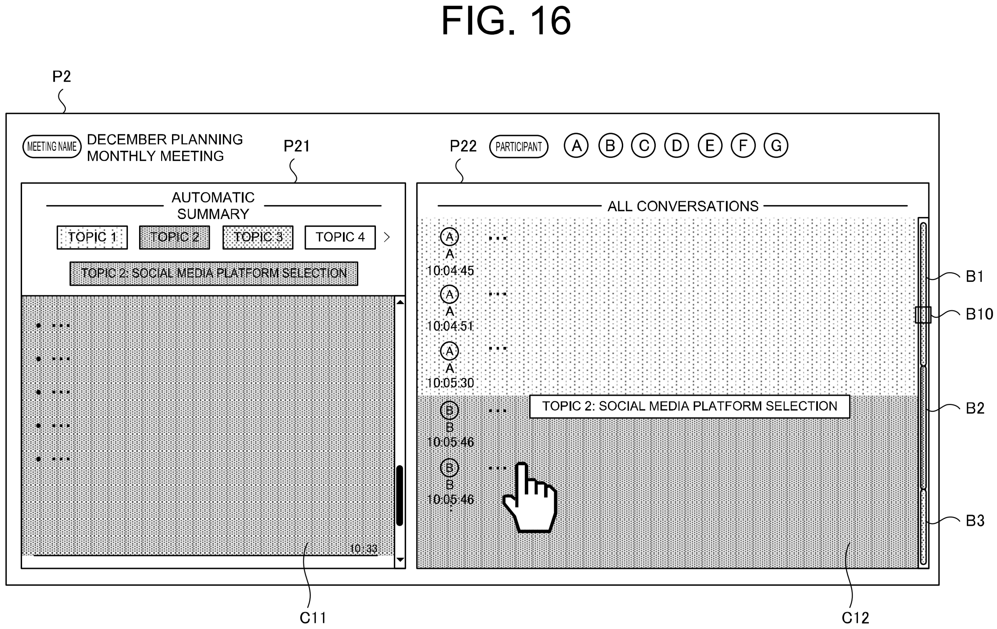

In the configuration shown in FIG. 14, for example, when a user selects conversation content (text information) of Topic 2 in the conversation display area P22, the display processing unit 116 may display a summary sentence corresponding to the selected conversation content of Topic 2 by searching from the beginning in the summary display area P21 as shown in FIG. 16. The display processing unit 116 can extract a summary sentence (summary ID) corresponding to the conversation content (conversation ID) with reference to the summary information D3 shown in FIG. 5.

As described above, the controller 11 converts voice uttered by a user into text information, generates a summary sentence based on the text information, and displays the text information and the summary sentence side by side on the meeting screen P2. Further, the controller 11 sets a topic of a conversation, generates the summary sentence for each topic, and displays the text information and the summary sentence corresponding to the topic side by side on the meeting screen P2.

### Wraparound Voice Control

When a plurality of audio devices 2 are used in the same space, uttered voice of one user is input to microphones of a plurality of audio devices 2, which causes a problem in that accuracy of voice processing decreases, such as generation of a plurality of pieces of text information regarding the same uttered voice or synthesis processing of the same uttered voice. For example, when user B utters in the meeting room R1 (see FIG. 1), user B's uttered voice may be input not only to the microphone of user B's audio device 2B but also to microphones of audio devices 2A, 2C, and 2D of other users A, C, and D (wraparound input). In this case, problems occur such as generation of a plurality of pieces of text information with the same content corresponding to respective voices acquired from respective audio devices 2, or synthesis processing of a plurality of voices with the same content. Therefore, the meeting support apparatus 1 of the present disclosure may include a configuration to solve the above problems.

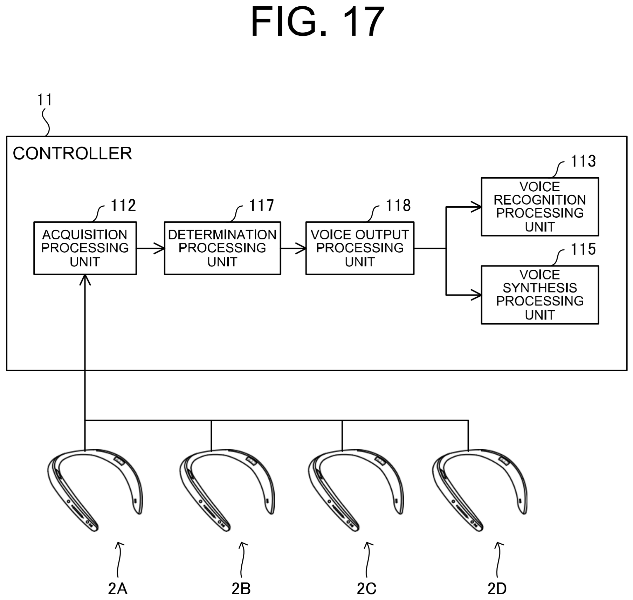

Specifically, as shown in FIG. 17, the controller 11 further includes, in addition to each processing unit shown in FIG. 2, a determination processing unit 117 that determines whether a plurality of voices input substantially simultaneously from a plurality of audio devices 2 are similar to each other, and a voice output processing unit 118 that outputs voice based on a determination result of the determination processing unit 117.

The determination processing unit 117 determines mutual similarity of a plurality of voices input substantially simultaneously to respective microphones of a plurality of audio devices 2 arranged in the same space. For example, the determination processing unit 117 determines similarity by comparing waveforms of a plurality of voices acquired by the acquisition processing unit 112. The determination processing unit 117 also determines whether the mutual similarity of the plurality of voices is equal to or higher than a threshold. The threshold is set to, for example, a reference value capable of identifying whether voices heard by a person's ear are the same voice.

The voice output processing unit 118 outputs the voice to a voice processing unit (voice recognition processing unit 113, voice synthesis processing unit 115) based on the determination result of the determination processing unit 117. Specifically, when the mutual similarity of the plurality of voices is equal to or higher than the threshold, the voice output processing unit 118 outputs a specific voice (first voice) among the plurality of voices to the voice recognition processing unit 113 and the voice synthesis processing unit 115. That is, when a plurality of voices acquired by the acquisition processing unit 112 are substantially the same voice, the voice output processing unit 118 outputs one voice among the plurality of voices to the voice recognition processing unit 113 and the voice synthesis processing unit 115.

When the mutual similarity of the plurality of voices is equal to or higher than the threshold, the voice output processing unit 118 also outputs a voice having a maximum sound pressure (first voice) among the plurality of voices to the voice recognition processing unit 113 and the voice synthesis processing unit 115. For example, when user B utters, the sound pressure of voice input to the microphone of user B's audio device 2B is maximum, and the sound pressure of voice input to each of microphones of audio devices 2A, 2C, and 2D located away from the audio device 2B is lower than the sound pressure of voice input to the microphone of the audio device 2B. Therefore, the voice output processing unit 118 determines that a voice having a maximum sound pressure among a plurality of similar voices is a regular voice, and outputs only the voice having the maximum sound pressure to the voice recognition processing unit 113 and the voice synthesis processing unit 115 while excluding other voices. Since the voice recognition processing unit 113 can execute voice recognition processing based on an appropriate voice, one appropriate summary sentence can be generated by subsequent processing of the summary generation processing unit 114. Further, since the voice synthesis processing unit 115 can execute synthesis processing based on an appropriate voice, an appropriate voice can be reproduced in the meeting room R2.

As another embodiment, when the mutual similarity of the plurality of voices is equal to or higher than the threshold, the voice output processing unit 118 may output a voice having a shortest delay time (first voice) among the plurality of voices to the voice recognition processing unit 113 and the voice synthesis processing unit 115. For example, when user B utters, voice input to each of the microphones of audio devices 2A, 2C, and 2D located away from user B's audio device 2B has a longer delay time compared to voice input to the microphone of the audio device 2B. For this reason, voice input to the microphone of user B's audio device 2B is first input to the acquisition processing unit 112, and thereafter, voices input to the microphones of audio devices 2A, 2C, and 2D are sequentially input according to distance after a lapse of a predetermined time. Therefore, the voice output processing unit 118 determines that a voice having a shortest delay time among a plurality of similar voices (voice that arrived earliest at the meeting support apparatus 1) is a regular voice, and outputs only the voice having the shortest delay time to the voice recognition processing unit 113 and the voice synthesis processing unit 115 while excluding other voices.

The controller 11 may determine a voice to be output based on both the sound pressure and the delay time. For example, the controller 11 extracts a plurality of voices in descending order of sound pressure from a plurality of similar voices, and determines a voice having the shortest delay time among the plurality of extracted voices as a voice to be output.

When the mutual similarity of the plurality of voices is lower than the threshold, the voice output processing unit 118 outputs the plurality of voices to the voice recognition processing unit 113 and the voice synthesis processing unit 115. For example, when a plurality of users utter substantially simultaneously, voices of different waveforms are input to the acquisition processing unit 112. In this case, the determination processing unit 117 determines that the plurality of voices are not similar to each other, and the voice output processing unit 118 outputs each of the plurality of voices to the voice recognition processing unit 113 and the voice synthesis processing unit 115. In this case, the voice recognition processing unit 113 sequentially executes voice recognition processing for each voice. The voice synthesis processing unit 115 synthesizes each voice into one voice and outputs it to the meeting terminal 3.

As another embodiment, when the mutual similarity of the plurality of voices is lower than the threshold, the voice output processing unit 118 may output a predetermined number of voices among the plurality of voices to the voice recognition processing unit 113 and output the plurality of voices to the voice synthesis processing unit 115. For example, when ten audio devices 2 are connected to the meeting support apparatus 1 and voice recognition processing and summary generation processing are executed for voices input substantially simultaneously from each of the ten audio devices 2, processing time may be required and a delay may occur in display of text information and a summary sentence. Therefore, the voice output processing unit 118 selects top three voices in descending order of sound pressure among ten voices acquired from each of the ten audio devices 2 and outputs them to the voice recognition processing unit 113. Note that ten voices are input to the voice synthesis processing unit 115. Thus, the voice recognition processing unit 113 executes voice recognition processing based on three specific voices, and the voice synthesis processing unit 115 executes a process of synthesizing ten voices into one voice.

According to the above configuration, it is possible to prevent problems such as generation of a plurality of summary sentences corresponding to respective voices acquired from respective audio devices 2 or synthesis processing of a plurality of voices with the same content.

### Meeting Support Process

FIG. 18 illustrates an example of a procedure of a meeting support process executed by the controller 11 of the meeting support apparatus 1.

The present disclosure can be understood as a meeting support method (information processing method, voice processing method of the present disclosure) that executes one or more steps included in the meeting support process. Further, one or more steps included in the meeting support process described here may be omitted as appropriate. Further, steps in the meeting support process may be executed in a different order as long as similar effects are produced. Furthermore, a case where the controller 11 executes each step in the meeting support process is described here as an example, but in other embodiments, one or more processors may distribute and execute each step in the meeting support process.

Here, a case where a meeting is conducted using a plurality of audio devices 2 arranged in a meeting room R1 as shown in FIG. 1 is described as an example. It is also assumed that topics are registered in advance before the meeting starts. A user can also register a topic during the meeting after starting the meeting.

### Step S1

First, in step S1, the controller 11 determines whether an operation of starting a meeting has been received. For example, user A, who is the meeting organizer, starts a meeting application on the meeting terminal 3 (user terminal 3A) and presses a start button K1 on a setting screen P1 (see FIG. 7A). When receiving a pressing operation of the start button K1, the controller 11 determines that a meeting start operation has been received. When determining that a meeting start operation has been received (S1: Yes), the controller 11 shifts the process to step S2. The controller 11 waits until receiving a meeting start operation (S1: No).

### Step S2

Next, in step S2, the controller 11 starts a process of acquiring voice uttered by a user from the audio device 2. For example, when the meeting starts and voice uttered by user B is input to the microphone of the audio device 2B, the controller 11 acquires the voice from the audio device 2B. When user B's voice is also input to microphones of other users' audio devices 2, the controller 11 also acquires the voice from those audio devices 2.

### Step S3

Next, in step S3, the controller 11 determines whether an operation of setting a meeting topic has been received. For example, when user A selects a meeting topic on the setting screen P1, the controller 11 receives the selection operation. When receiving the selection operation (S3: Yes), the controller 11 shifts the process to step S4. The controller 11 waits until receiving the selection operation from a user (S3: No).

### Step S4

In step S4, the controller 11 sets the topic selected by the user. After setting the topic, the controller 11 registers information regarding the topic (topic ID, topic name, etc.) in topic information D4 (see FIG. 6).

### Step S5

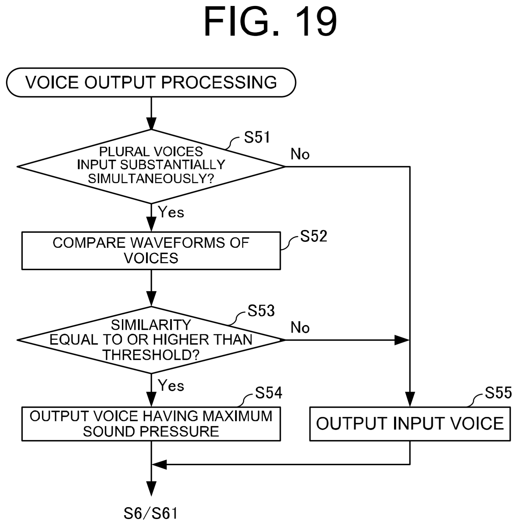

Next, in step S5, the controller 11 executes voice output processing. The controller 11 outputs voice acquired from one audio device 2 or a plurality of voices acquired substantially simultaneously from a plurality of audio devices 2 to a voice recognition processing unit and a voice synthesis processing unit according to predetermined conditions. FIG. 19 illustrates a specific example of the voice output processing.

### Step S51

In step S51 of FIG. 19, the controller 11 determines whether a plurality of voices have been input substantially simultaneously from each of a plurality of audio devices 2. When determining that a plurality of voices have been input substantially simultaneously (S51: Yes), the controller 11 shifts the process to step S52. On the other hand, when determining that a plurality of voices have not been input substantially simultaneously (S51: No), the controller 11 shifts the process to step S55.

### Steps S52, S53

In step S52, the controller 11 compares waveforms of the plurality of voices. Next, in step S53, the controller 11 determines whether mutual similarity of the plurality of voices is equal to or higher than a threshold. Specifically, the controller 11 compares the waveform of each voice to calculate similarity between respective voices, and determines whether the calculated similarity is equal to or higher than the threshold. When determining that the similarity is equal to or higher than the threshold (S53: Yes), the controller 11 shifts the process to step S54. On the other hand, when determining that the similarity is lower than the threshold (S53: No), the controller 11 shifts the process to step S55.

### Step S54

In step S54, the controller 11 outputs a voice having a maximum sound pressure among a plurality of similar voices to the voice recognition processing unit and the voice synthesis processing unit. As another embodiment, the controller 11 may output a voice having a shortest delay time (earliest arrival time) among a plurality of similar voices to the voice recognition processing unit and the voice synthesis processing unit.

### Step S55

In contrast, in step S55, the controller 11 outputs one or more input voices to the voice recognition processing unit and the voice synthesis processing unit. For example, when a plurality of voices are not input substantially simultaneously (S51: No), the controller 11 outputs each voice to the voice recognition processing unit and the voice synthesis processing unit in input order. For example, when a plurality of voices are not similar (S53: No), the controller 11 outputs each voice to the voice recognition processing unit and the voice synthesis processing unit.

After the voice output processing (S5), the controller 11 shifts the process to steps S6 and S61 (see FIG. 18).

### Step S6

In step S6, the controller 11 executes voice recognition processing. Specifically, the controller 11 uses a predetermined voice recognition engine (learned model) to acquire the voice output in step S5 and convert it into text information. The controller 11 also registers the text information (utterance content) in utterance information D2 (see FIG. 4) in association with time information (utterance time), an utterer, and a topic (topic ID).

### Step S7

Next, in step S7, the controller 11 executes a process of generating a summary sentence. Specifically, the controller 11 uses a predetermined summary generation engine (learned model) to generate a summary sentence from the text information. The controller 11 also generates a summary sentence for each predetermined section. Specifically, the controller 11 generates a summary sentence every predetermined time (e.g., 5 minutes) or every predetermined number of characters (e.g., 1500 characters) of the text information.

The controller 11 registers the generated summary sentence (summary content) in summary information D3 (see FIG. 5) in association with the section (section ID), a summary ID, a conversation (conversation ID) corresponding to the text information, and a topic ID. The controller 11 also registers the summary ID in topic information D4 (see FIG. 6).

### Step S8

Next, in step S8, the controller 11 causes the display screen to display the text information and the summary sentence. Specifically, on a meeting screen P2 (see FIG. 8), the controller 11 displays the text information under conversation in the conversation display area P22 and displays the summary sentence generated for each predetermined section in a summary display area P21. In the conversation display area P22, the controller 11 sequentially adds and displays text information in real time while scrolling the screen. In the conversation display area P22, the controller 11 also displays identification information (user name, user icon) of a user of uttered voice corresponding to the text information and the time information (utterance time) in association with the text information.

In the summary display area P21, the controller 11 also displays identification information (summary creation time) capable of identifying the section and a user icon U1 capable of identifying a user who uttered in the section in association with the summary sentence corresponding to the section (see FIG. 11).

### Step S9

Next, in step S9, the controller 11 determines whether a user operation has been received on the meeting screen P2. When determining that a user operation has been received on the meeting screen P2 (S9: Yes), the controller 11 shifts the process to step S10. On the other hand, when determining that no user operation has been received on the meeting screen P2 (S9: No), the controller 11 shifts the process to step S11. For example, a user can perform an operation of selecting a topic, an operation of selecting a summary sentence, an operation of selecting text information (conversation content), and the like on the meeting screen P2.

### Step S10

In step S10, the controller 11 executes display change processing according to the user operation. For example, when the topic currently under conversation is "Topic 2" (see FIG. 9) and a user selects "Topic 1" in the summary display area P21, the controller 11 displays a summary sentence corresponding to Topic 1 in the summary display area P21 as shown in FIG. 10. In this case, the controller 11 displays an identification mark M1 capable of identifying "Topic 2" currently under conversation near "Topic 2" in the summary display area P21.

As shown in FIG. 12, when a user presses "10:11" which is a creation time of a summary sentence of a specific section (section from 10:06 to 10:11) in the summary display area P21, or when a user presses a summary sentence of the section, the controller 11 displays conversation content (text information) that is a basis of the summary sentence in the conversation display area P22. When the user presses a cancel button K3, the controller 11 resumes display processing of real-time conversation content in the conversation display area P22.

As shown in FIG. 13, when a user presses conversation content (text information) in the conversation display area P22, the controller 11 additionally displays the text information (summary sentence Y1) in the summary display area P21.

After step S10, the controller 11 shifts the process to step S11.

### Step S61

On the other hand, in step S61, the controller 11 executes voice synthesis processing. Specifically, when a plurality of similar voices are input substantially simultaneously, the controller 11 executes synthesis processing for a voice having a maximum sound pressure. When a plurality of dissimilar voices are input substantially simultaneously, the controller 11 executes a process of synthesizing a plurality of voices into one voice.

### Step S62

Next, in step S62, the controller 11 outputs synthesized voice to a meeting terminal 3 (e.g., user terminal 3A). A meeting application of a meeting server 4 transmits the voice received by the meeting terminal 3 in the meeting room R1 to the meeting terminal 3 in the meeting room R2. After step S62, the controller 11 shifts the process to step S11.

### Step S11

In step S11, the controller 11 determines whether an operation of ending the meeting has been received. For example, user A ends the meeting application when ending the meeting. When receiving an end operation of the meeting application, the controller 11 determines that a meeting end operation has been received. When determining that a meeting end operation has been received (S11: Yes), the controller 11 ends the meeting support process. On the other hand, when not receiving a meeting end operation (S11: No), the controller 11 returns the process to step S1.

Returning to step S1, for example, when user A performs an operation of changing a topic, the controller 11 sets a new topic (S4) and starts a conversation of the topic. For example, a user presses a stop button K2 on a setting screen P11 (see FIG. 7B) and selects another topic on the setting screen P1 (see FIG. 7A). When setting the selected topic (S4), the controller 11 executes the above-described processes (S5 to S10) for voice of utterance content regarding the topic. The controller 11 repeatedly executes the above-described processes according to topics until ending the meeting.

Here, for example, when a user sets "Topic 1" and changes to "Topic 2" after a conversation of Topic 1 is conducted, respective summary sentences of Topic 1 and Topic 2 are generated. When the user returns to "Topic 1" and a conversation is conducted, a summary sentence of a previous conversation and a summary sentence of a subsequent conversation regarding Topic 1 are respectively generated. As another embodiment, for "Topic 1," the controller 11 may regenerate a summary sentence summarizing a summary sentence of a previous conversation and a summary sentence of a subsequent conversation. Thus, even when a topic is changed to a new topic or returned to an original topic, an appropriate summary sentence can be generated for each topic. A user can also check a summary sentence and conversation content of a previous conversation and a summary sentence and conversation content of a subsequent conversation regarding the same topic on the meeting screen P2.

As another embodiment, the controller 11 may generate minutes of the meeting when the meeting ends. For example, when a meeting regarding a plurality of topics is conducted, the controller 11 generates minutes summarizing summary sentences for each topic. Based on a plurality of summary sentences of one topic, the controller 11 may generate a gist, a conclusion, action items, etc. of the topic and summarize them in minutes. The controller 11 may store the minutes in the storage unit 12 or may upload them to a shared folder of a data server (not shown). Each user may be able to access the shared folder on the user terminal 3 and view the minutes.

As described above, the meeting support system 100 according to the present disclosure acquires voice uttered by a user, converts the voice into text information, generates a summary sentence based on the text information, and displays the text information and the summary sentence side by side on a display screen (meeting screen P2). Thus, since utterance content that is a basis of a summary sentence can be checked together with a summary result, it is possible to improve convenience of a function of displaying a summary based on utterance content.

As another embodiment, the meeting support system 100 sets a meeting topic, acquires voice uttered by a user, converts the voice into text information, generates a summary sentence for each topic based on the text information, and displays the text information and the summary sentence corresponding to the topic side by side on a display screen (meeting screen P2). Thus, summary sentences can be grasped for each topic, and utterance content that is a basis of a summary sentence can be checked together with a summary result, so that convenience can be further improved.

In each of the above-described embodiments, the meeting support system 100 further acquires voice uttered by a user input to each microphone of a plurality of audio devices 2 arranged in the same space, determines mutual similarity of a plurality of voices acquired from each of the plurality of audio devices, and when the mutual similarity of the plurality of voices is equal to or higher than a threshold, outputs a specific first voice among the plurality of voices to a voice processing unit. Thus, it is possible to prevent problems such as generation of a plurality of summary sentences corresponding to respective voices input substantially simultaneously from respective audio devices 2 or decrease in accuracy of voice processing such as synthesis processing of a plurality of voices with the same content.

### Other Embodiments of Summary Generation Process

In the above-described embodiment, the summary generation processing unit 114 is configured to generate a summary sentence every predetermined time (e.g., 5 minutes) or every predetermined number of characters (e.g., 1500 characters) of text information. In the above configuration, for example, when text information not satisfying the predetermined time or the predetermined number of characters exists at the end of a meeting or at the time of switching a topic, a problem occurs in that a summary corresponding to the text information is not appropriately generated.

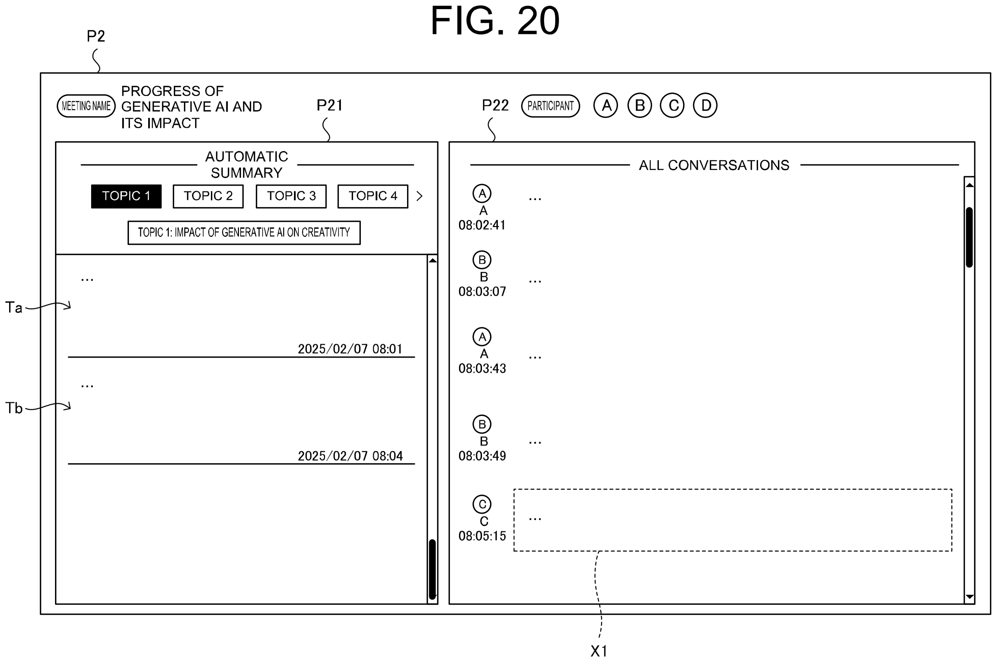

For example, the meeting screen P2 in FIG. 20 shows a state in which summary sentences Ta and Tb of conversation content (text information) up to "08:04" are generated and displayed, and thereafter, user C utters immediately before the meeting ends ("08:05:15"). In this case, when the number of characters of text information X1 of user C's utterance content is less than a predetermined number of characters (1500 characters), a summary sentence corresponding to the text information X1 is not generated, causing a problem in that user C's utterance content is not reflected in the meeting summary.

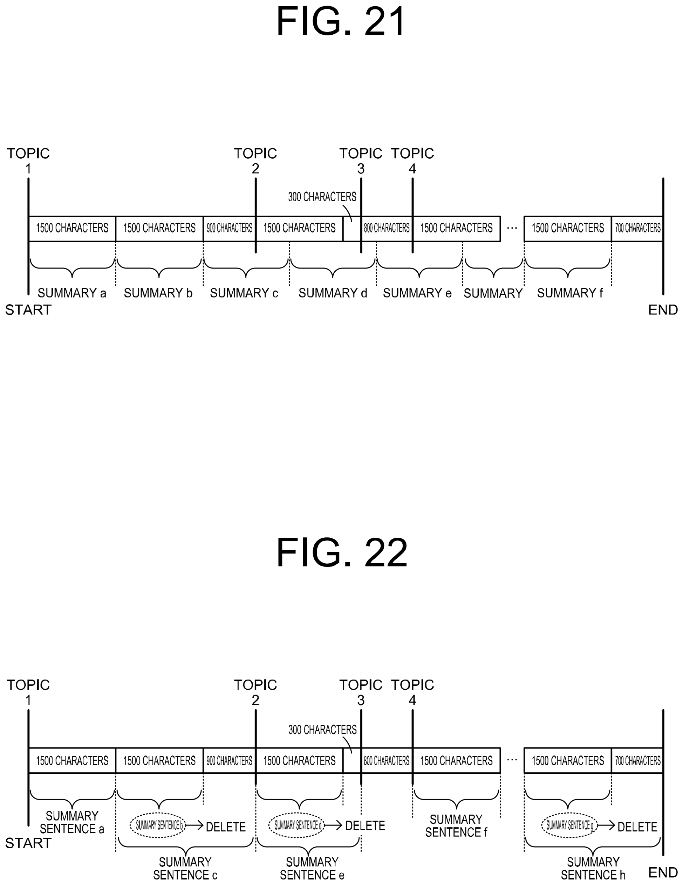

FIG. 21 schematically illustrates the above problem. For example, when text information uttered by a user immediately before the meeting ends is 700 characters, a summary sentence of the text information is not generated. For "Topic 1," summary sentences a and b are generated every 1500 characters, and when text information uttered by a user immediately before "Topic 1" ends is 900 characters, 600 characters in text information uttered by a user immediately after next "Topic 2" starts are combined with last 900 characters of "Topic 1" to generate a summary. Thus, at the time of switching topics, a problem occurs in that a summary in which utterance contents of previous and subsequent topics are mixed is generated.

Therefore, the summary generation processing unit 114 includes a configuration to solve the above problem. Specifically, when the number of characters of first text information converted from a first voice is less than a predetermined number of characters, the summary generation processing unit 114 generates a first summary sentence corresponding to the first text information based on the first text information and second text information converted from a second voice uttered before the first voice. Specific examples (First Example to Third Example) of the above configuration will be described below.

### First Example

When the number of characters of the first text information is less than the predetermined number of characters, the summary generation processing unit 114 according to a first example generates the first summary sentence based on the first text information and all of the second text information. When the first summary sentence is generated after a second summary sentence corresponding to the second text information is displayed in the summary display area P21 of the meeting screen P2, the display processing unit 116 deletes the second summary sentence and displays the first summary sentence in the summary display area P21.

FIG. 22 schematically illustrates a summary generation process corresponding to the first example. For example, when a meeting starts and a conversation about "Topic 1" starts, the summary generation processing unit 114 generates a summary sentence every 1500 characters (an example of the first predetermined number of characters). Here, when utterance content (text information) uttered by a user immediately before "Topic 1" ends is 900 characters, the summary generation processing unit 114 generates a summary sentence based on 2400-character text information obtained by combining 1500 characters of utterance content immediately before the 900-character utterance and the 900 characters. That is, after generating a summary sentence b for 1500 characters, the summary generation processing unit 114 generates a summary sentence c corresponding to 2400 characters. The display processing unit 116 displays the previously generated summary sentence b in the summary display area P21, and thereafter when the summary sentence c is generated, deletes the summary sentence b and displays the summary sentence c in the summary display area P21.

When Topic 1 switches to "Topic 2" and a conversation of "Topic 2" starts, the summary generation processing unit 114 generates a summary sentence every 1500 characters. When utterance content (text information) uttered by a user immediately before "Topic 2" ends is 300 characters, the summary generation processing unit 114 generates a summary sentence based on 1800-character text information obtained by combining 1500 characters of utterance content immediately before the 300-character utterance and the 300 characters. That is, after generating a summary sentence d for 1500 characters, the summary generation processing unit 114 generates a summary sentence e corresponding to 1800 characters. The display processing unit 116 displays the previously generated summary sentence d in the summary display area P21, and thereafter when the summary sentence e is generated, deletes the summary sentence d and displays the summary sentence e in the summary display area P21.

Similarly, at the end of the meeting, for example, when utterance content (text information) uttered by a user immediately before the meeting ends is 700 characters, the summary generation processing unit 114 generates a summary sentence based on 2200-character text information obtained by combining 1500 characters of utterance content immediately before the 700-character utterance and the 700 characters. That is, after generating a summary sentence g for 1500 characters, the summary generation processing unit 114 generates a summary sentence h corresponding to 2200 characters. The display processing unit 116 displays the previously generated summary sentence g in the summary display area P21, and thereafter when the summary sentence h is generated, deletes the summary sentence g and displays the summary sentence h in the summary display area P21.

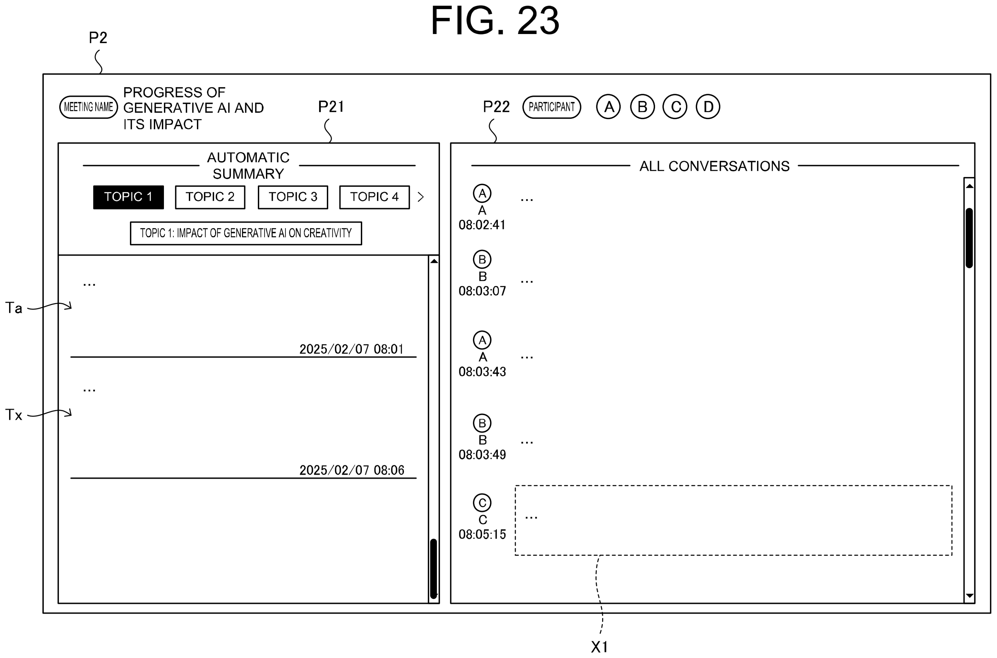

FIG. 23 illustrates a specific example of the meeting screen P2 according to the first example. When the utterance content (text information X1) uttered by user C at the end of Topic 1 is less than 1500 characters, the summary generation processing unit 114 generates a summary sentence Tx by combining the text information X1 and 1500-character text information immediately before the text information X1. The summary generation processing unit 114 generates the summary sentence Tx at "08:06" after an utterance time "08:05:15" when user C uttered. The display processing unit 116 deletes the summary sentence Tb (see FIG. 20) generated at "08:04" and displays the summary sentence Tx generated at "08:06." User C's utterance content (text information X1) is reflected in the summary sentence Tx.

According to the above configuration, it is possible to solve problems such as generation of a summary across topics or non-generation of a summary of utterance content at the end of a meeting, and a summary sentence appropriately reflecting conversation content at the time of switching a topic and conversation content at the end of a meeting can be appropriately generated.

When the total number of characters of text information of the entire conversation of a topic is less than 1500 characters, the summary generation processing unit 114 may omit the generation process of a summary sentence. In the example of FIG. 22, since the total number of characters of text information of the entire conversation of "Topic 3" is 800 characters, the summary generation processing unit 114 omits the generation process of a summary sentence of "Topic 3." In this case, when a topic switches (e.g., when switches to "Topic 4"), the display processing unit 116 may display a message to the effect that a summary of "Topic 3" was not generated.

As another embodiment of the first example, when the number of characters of text information at the time of switching a topic or ending a meeting is equal to or greater than a second predetermined number of characters (e.g., 1000 characters) and less than the first predetermined number of characters (e.g., 1500 characters), the summary generation processing unit 114 may generate the first summary sentence based on the first text information. For example, when a summary sentence with high accuracy can be generated by the summary generation engine (learned model) if the number of characters of text information at the time of switching a topic or ending a meeting is 1000 characters or more, the summary generation processing unit 114 may generate a summary sentence only with the text information. In this way, when the number of characters of the first text information at the time of switching a topic or ending a meeting is less than the second predetermined number of characters, the summary generation processing unit 114 generates the first summary sentence based on the first text information and all of the immediate second text information, and when the number of characters of the first text information is equal to or greater than the second predetermined number of characters and less than the first predetermined number of characters, may generate the first summary sentence based on only the first text information.

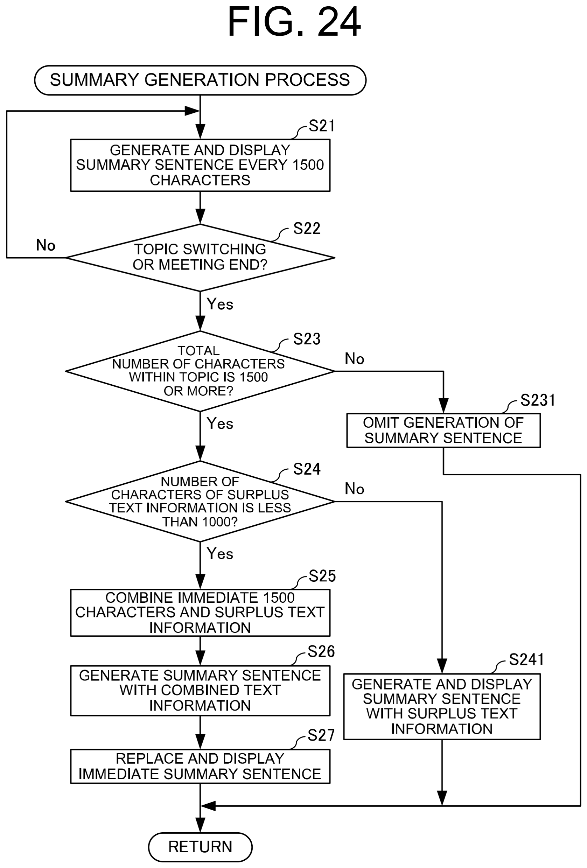

FIG. 24 illustrates an example of a procedure of a summary generation process according to the first example. The summary generation process is included in the meeting support process (see FIG. 18).

### Step S21

When a meeting starts, the controller 11 converts user's uttered voice into text information in step S21, and generates a summary sentence every time the number of characters of the text information reaches a first predetermined number of characters (1500 characters). On the meeting screen P2 (see FIG. 23), the controller 11 also displays the text information under conversation in the conversation display area P22 and displays the generated summary sentence in the summary display area P21.

### Step S22

In step S22, the controller 11 determines whether a topic has switched or whether the meeting has ended. For example, when a user presses a button of "Topic 2" on the setting screen P1 (see FIG. 7A) during a meeting of "Topic 1," the controller 11 determines that the topic has switched. When a user presses an "End" button on the setting screen P11 (see FIG. 7B) during a meeting, the controller 11 determines that the meeting has ended. When a topic switches or the meeting ends (S22: Yes), the controller 11 shifts the process to step S23. When a topic has not switched or the meeting has not ended (S22: No), the controller 11 repeats the process of step S21.

### Step S23

In step S23, the controller 11 determines whether the total number of characters of text information within a topic is 1500 characters or more. When the total number of characters is 1500 characters or more (S23: Yes), the controller 11 shifts the process to step S24. On the other hand, when the total number of characters is less than 1500 characters (S23: No), the controller 11 shifts the process to step S231.

### Step S24

In step S24, the controller 11 determines whether the number of characters of text information accumulated when a topic switches or the meeting ends (surplus text information remaining at the end of a topic or a meeting) is less than 1000 characters (an example of the second predetermined number of characters). When the number of characters of the surplus text information is less than 1000 characters (S24: Yes), the controller 11 shifts the process to step S25. On the other hand, when the number of characters of the surplus text information is 1000 characters or more (S24: No), the controller 11 shifts the process to step S241.

### Step S25

In step S25, the controller 11 combines 1500 characters of text information immediately before the surplus text information and the surplus text information. Specifically, the controller 11 combines 1500 characters of text information used for a summary sentence generated immediately before a topic switches or the meeting ends and surplus text information of less than 1000 characters.

### Step S26

In step S26, the controller 11 generates a summary sentence at a time when a topic switches or the meeting ends based on the combined text information. In the example shown in FIG. 22, for 900-character surplus text information when Topic 1 switches to Topic 2, the controller 11 generates a summary sentence c based on text information obtained by combining 1500 characters immediately before and 900 characters. The controller 11 also generates a summary sentence h based on text information obtained by combining 1500 characters immediately before and 700 characters for 700-character surplus text information when the meeting ends.

### Step S27

In step S27, on the summary display area P21 of the meeting screen P2, the controller 11 displays the summary sentence generated based on the combined text information in place of the immediate summary sentence. In the example shown in FIG. 22, when Topic 1 switches to Topic 2, the controller 11 deletes the immediate summary sentence b and displays the summary sentence c generated based on the combined text information. When the meeting ends, the controller 11 deletes the immediate summary sentence g and displays the summary sentence h generated based on the combined text information.

### Step S241

In step S241, the controller 11 generates a summary sentence at a time when a topic switches or the meeting ends based on the surplus text information and displays it in the summary display area P21. Specifically, the controller 11 generates a summary sentence only with surplus text information of 1000 characters or more at a time when a topic switches or the meeting ends and displays it in the summary display area P21.

### Step S231

In step S231, the controller 11 omits the generation process of a summary sentence. In the example shown in FIG. 22, since the total number of characters of text information of "Topic 3" is 800 characters, the controller 11 does not generate a summary sentence of the text information and displays a message to the effect that a summary of "Topic 3" was not generated.

After steps S27, S241, and S231, the controller 11 returns the process to step S21 and repeats the above-described process. When receiving a meeting end operation in step S22, the controller 11 ends the summary generation process after steps S27, S241, and S231.

As described above, when the number of characters of the first text information converted from the first voice at the time of switching a topic or ending a meeting is less than the predetermined number of characters, the summary generation processing unit 114 according to the first example generates a summary sentence corresponding to the first text information based on the first text information (surplus text information) and all of the second text information (1500 characters of text information) converted from the second voice uttered before the first voice. This makes it possible to generate a summary sentence appropriately reflecting utterance contents at the end of a meeting and at the time of switching a topic.

### Second Example

A summary generation process according to a second example will be described. Note that descriptions of the same configuration as that shown in the first example are omitted. When the number of characters of the first text information is less than the first predetermined number of characters, the summary generation processing unit 114 according to the second example generates the first summary sentence based on the first text information and part of the second text information. When the first summary sentence is generated after a second summary sentence corresponding to the second text information is displayed in the summary display area P21 of the meeting screen P2, the display processing unit 116 additionally displays the first summary sentence in the summary display area P21 without deleting the second summary sentence.

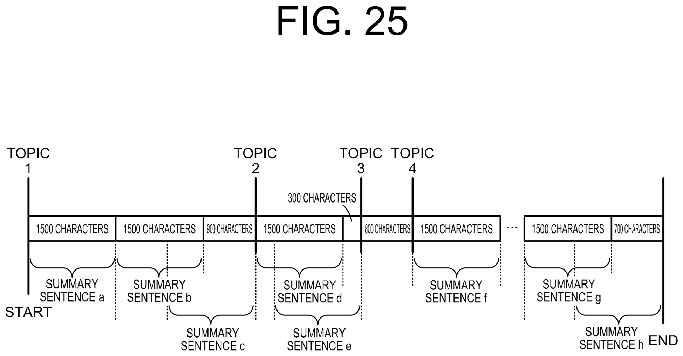

FIG. 25 schematically illustrates a summary generation process corresponding to the second example. For example, when a meeting starts and a conversation about "Topic 1" starts, the summary generation processing unit 114 generates a summary sentence every 1500 characters (an example of the first predetermined number of characters). Here, when utterance content (text information) uttered by a user immediately before "Topic 1" ends is 900 characters, the summary generation processing unit 114 generates a summary sentence based on 1500-character text information obtained by combining 600 characters at the end of 1500 characters of utterance content immediately before the 900-character utterance and the 900 characters. That is, after generating a summary sentence b for 1500 characters, the summary generation processing unit 114 generates a summary sentence c corresponding to 1500 characters. The display processing unit 116 displays the previously generated summary sentence b in the summary display area P21, and thereafter when the summary sentence c is generated, displays the summary sentence c following the summary sentence b in the summary display area P21.

When Topic 1 switches to "Topic 2" and a conversation of "Topic 2" starts, the summary generation processing unit 114 generates a summary sentence every 1500 characters. When utterance content (text information) uttered by a user immediately before "Topic 2" ends is 300 characters, the summary generation processing unit 114 generates a summary sentence based on 1500-character text information obtained by combining 1200 characters at the end of 1500 characters of utterance content immediately before the 300-character utterance and the 300 characters. That is, after generating a summary sentence d for 1500 characters, the summary generation processing unit 114 generates a summary sentence e corresponding to 1500 characters. The display processing unit 116 displays the previously generated summary sentence d in the summary display area P21, and thereafter when the summary sentence e is generated, displays the summary sentence e following the summary sentence d in the summary display area P21.

Similarly, at the end of the meeting, for example, when utterance content (text information) uttered by a user immediately before the meeting ends is 700 characters, the summary generation processing unit 114 generates a summary sentence based on 1500-character text information obtained by combining 800 characters at the end of 1500 characters of utterance content immediately before the 700-character utterance and the 700 characters. That is, after generating a summary sentence g for 1500 characters, the summary generation processing unit 114 generates a summary sentence h corresponding to 1500 characters. The display processing unit 116 displays the previously generated summary sentence g in the summary display area P21, and thereafter when the summary sentence h is generated, displays the summary sentence h following the summary sentence g in the summary display area P21.

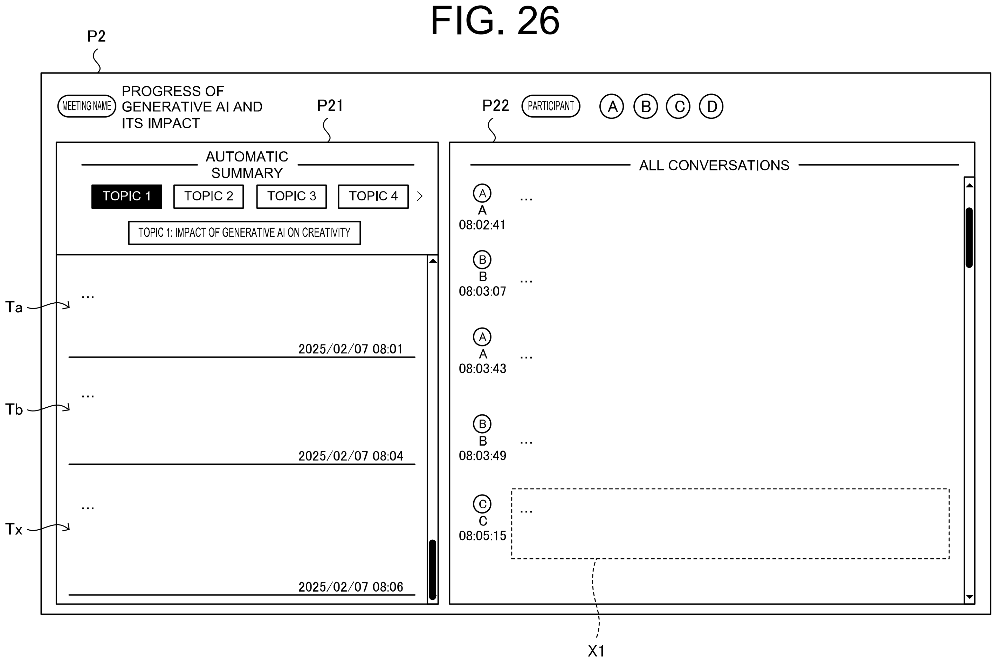

FIG. 26 illustrates a specific example of the meeting screen P2 according to the second example. When the utterance content (text information X1) uttered by user C at the end of Topic 1 is less than 1500 characters, the summary generation processing unit 114 generates a summary sentence Tx by combining the text information X1 and part (end) of 1500 characters immediately before the text information X1. The summary generation processing unit 114 generates the summary sentence Tx at "08:06" after an utterance time "08:05:15" when user C uttered. The display processing unit 116 displays the summary sentence Tx generated at "08:06" following the summary sentence Tb generated at "08:04." User C's utterance content is reflected in the summary sentence Tx.

In this way, the summary generation processing unit 114 according to the second example generates a summary sentence based on text information of the number of characters of a difference between the first predetermined number of characters and the number of characters of the first text information from the end in time series of utterance times among the second text information, and the first text information. That is, when text information (surplus text information) at the time of switching a topic or ending a meeting is less than 1500 characters, the summary generation processing unit 114 extracts part of text information from the end of the immediate text information so that the total number of characters becomes 1500 characters, and generates a summary sentence from 1500-character text information obtained by combining the surplus text information and the extracted text information. In other words, when text information (surplus text information) at the time of switching a topic or ending a meeting is less than 1500 characters, the summary generation processing unit 114 extracts 1500 characters retrospectively from the time of switching a topic or ending a meeting to generate a summary sentence.

When the total number of characters of text information of the entire conversation of a topic is less than 1500 characters, the summary generation processing unit 114 may omit the generation process of a summary sentence similarly to the first example.

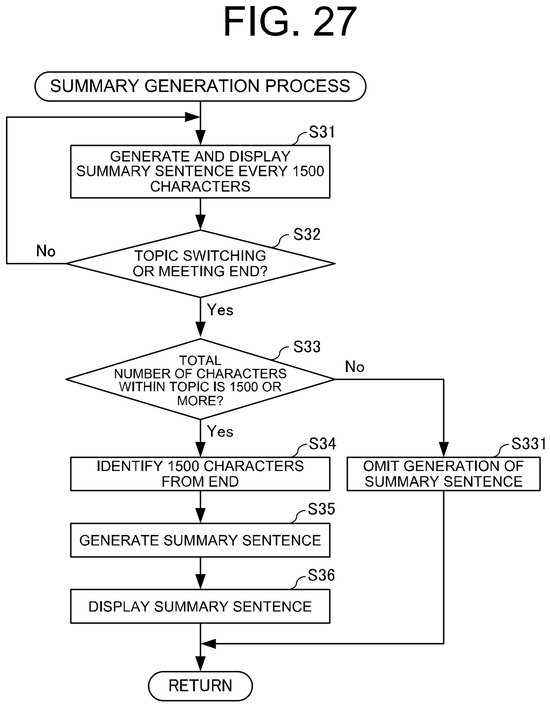

FIG. 27 illustrates an example of a procedure of a summary generation process according to the second example.

### Step S31

When a meeting starts, the controller 11 converts user's uttered voice into text information in step S31, and generates a summary sentence every time the number of characters of the text information reaches a first predetermined number of characters (1500 characters). On the meeting screen P2 (see FIG. 26), the controller 11 also displays the text information under conversation in the conversation display area P22 and displays the generated summary sentence in the summary display area P21.

### Step S32

In step S32, the controller 11 determines whether a topic has switched or whether the meeting has ended. For example, when a user presses a button of "Topic 2" on the setting screen P1 (see FIG. 7A) during a meeting of "Topic 1," the controller 11 determines that the topic has switched. When a user presses an "End" button on the setting screen P11 (see FIG. 7B) during a meeting, the controller 11 determines that the meeting has ended. When a topic switches or the meeting ends (S32: Yes), the controller 11 shifts the process to step S33. When a topic has not switched or the meeting has not ended (S32: No), the controller 11 repeats the process of step S31.

### Step S33

In step S33, the controller 11 determines whether the total number of characters of text information within a topic is 1500 characters or more. When the total number of characters is 1500 characters or more (S33: Yes), the controller 11 shifts the process to step S34. On the other hand, when the total number of characters is less than 1500 characters (S33: No), the controller 11 shifts the process to step S331.

### Step S34

In step S34, the controller 11 identifies 1500 characters of text information from the end of text information at the time of switching a topic or ending a meeting. Specifically, the controller 11 extracts text information corresponding to a difference between 1500 characters and the number of characters of surplus text information from the end in time series among 1500 characters of text information used for a summary sentence generated immediately before a topic switches or the meeting ends. In the example shown in FIG. 25, since surplus text information when Topic 1 switches to Topic 2 is 900 characters, the controller 11 extracts 600 characters of text information from the end among 1500 characters of text information used for the immediate summary sentence b. The controller 11 identifies 1500 characters of text information obtained by combining the extracted 600 characters of text information and 900 characters of surplus text information.

Since surplus text information when the meeting ends is 700 characters, the controller 11 extracts 800 characters of text information from the end among 1500 characters of text information used for the immediate summary sentence g. The controller 11 identifies 1500 characters of text information obtained by combining the extracted 800 characters of text information and 700 characters of surplus text information.

### Step S35

In step S35, the controller 11 generates a summary sentence at a time when a topic switches or the meeting ends based on the identified 1500 characters of text information. In the example shown in FIG. 25, for 900-character surplus text information when Topic 1 switches to Topic 2, the controller 11 generates a summary sentence c based on 1500-character text information obtained by combining 600 characters immediately before and 900 characters. The controller 11 also generates a summary sentence h based on 1500-character text information obtained by combining 800 characters immediately before and 700 characters for 700-character surplus text information when the meeting ends.

### Step S36

In step S36, on the summary display area P21 of the meeting screen P2, the controller 11 displays the summary sentence generated based on the combined text information following the immediate summary sentence. In the example shown in FIG. 25, when Topic 1 switches to Topic 2, the controller 11 displays the summary sentence c generated based on the combined 1500 characters of text information following the immediate summary sentence b. When the meeting ends, the controller 11 displays the summary sentence h generated based on the combined 1500 characters of text information following the immediate summary sentence g.

### Step S331

In step S331, the controller 11 omits the generation process of a summary sentence. In the example shown in FIG. 25, since the total number of characters of text information of "Topic 3" is 800 characters, the controller 11 does not generate a summary sentence of the text information and displays a message to the effect that a summary of "Topic 3" was not generated.

After steps S36 and S331, the controller 11 returns the process to step S31 and repeats the above-described process. When receiving a meeting end operation in step S32, the controller 11 ends the summary generation process after steps S36 and S331.

As described above, when the number of characters of the first text information converted from the first voice at the time of switching a topic or ending a meeting is less than the predetermined number of characters, the summary generation processing unit 114 according to the second example generates a summary sentence corresponding to the first text information based on the first text information (surplus text information) and part of the second text information (1500 characters of text information) converted from the second voice uttered before the first voice. This makes it possible to generate a summary sentence appropriately reflecting utterance contents at the end of a meeting and at the time of switching a topic.

### Third Example

A summary generation process according to a third example will be described. Note that descriptions of the same configuration as those shown in the first and second examples are omitted. When the number of characters of text information is equal to or greater than a predetermined number of characters, the summary generation processing unit 114 according to the third example generates a summary sentence using a summary generation engine for normal text (first summary generation model) for the text information (surplus text information), and when the number of characters of surplus text information is less than the predetermined number of characters, generates a summary sentence using a summary generation engine for short text (second summary generation model).

For example, when the number of characters of text information is equal to or greater than a predetermined number of characters, the summary generation processing unit 114 generates a summary sentence of the text information (surplus text information) by a normal prompt (e.g., an instruction to the summary generation engine to "summarize the following meeting conversation text"), and when the number of characters of surplus text information is less than the predetermined number of characters, generates a summary sentence of the surplus text information by a prompt for short text (e.g., an instruction to the summary generation engine to "extract only sentences considered to be important from the following meeting conversation text; if there are no important sentences, display nothing").

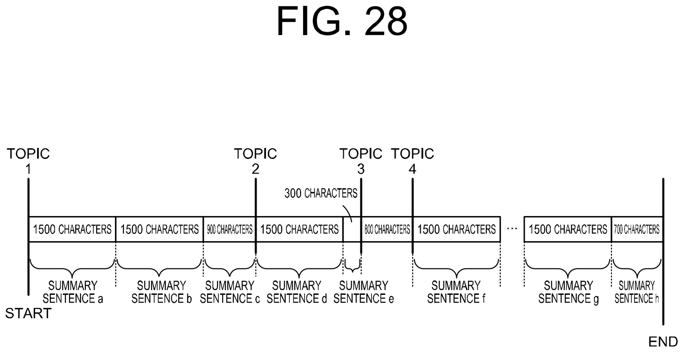

FIG. 28 schematically illustrates a summary generation process corresponding to the third example. For example, when a meeting starts and a conversation about "Topic 1" starts, the summary generation processing unit 114 generates a summary sentence of 1500-character text information by a normal prompt every 1500 characters. Here, when utterance content (text information) uttered by a user immediately before "Topic 1" ends is 900 characters, which is less than 1000 characters (an example of a predetermined number of characters), the summary generation processing unit 114 generates a summary sentence of the 900-character text information by a prompt for short text. That is, after generating a summary sentence b for 1500 characters, the summary generation processing unit 114 generates a summary sentence c summarizing 900 characters. The display processing unit 116 displays the previously generated summary sentence b in the summary display area P21, and thereafter when the summary sentence c is generated, displays the summary sentence c following the summary sentence b in the summary display area P21.

When Topic 1 switches to "Topic 2" and a conversation of "Topic 2" starts, the summary generation processing unit 114 generates a summary sentence of 1500-character text information by a normal prompt every 1500 characters. When utterance content (text information) uttered by a user immediately before "Topic 2" ends is 300 characters, the summary generation processing unit 114 generates a summary sentence of the 300-character text information by a prompt for short text. That is, after generating a summary sentence d for 1500 characters, the summary generation processing unit 114 generates a summary sentence e summarizing 300 characters. The display processing unit 116 displays the previously generated summary sentence d in the summary display area P21, and thereafter when the summary sentence e is generated, displays the summary sentence e following the summary sentence d in the summary display area P21.

Similarly, at the end of the meeting, for example, when utterance content (text information) uttered by a user immediately before the meeting ends is 700 characters, the summary generation processing unit 114 generates a summary sentence of the 700-character text information by a prompt for short text. That is, after generating a summary sentence g for 1500 characters, the summary generation processing unit 114 generates a summary sentence h summarizing 700 characters. The display processing unit 116 displays the previously generated summary sentence g in the summary display area P21, and thereafter when the summary sentence h is generated, displays the summary sentence h following the summary sentence g in the summary display area P21.

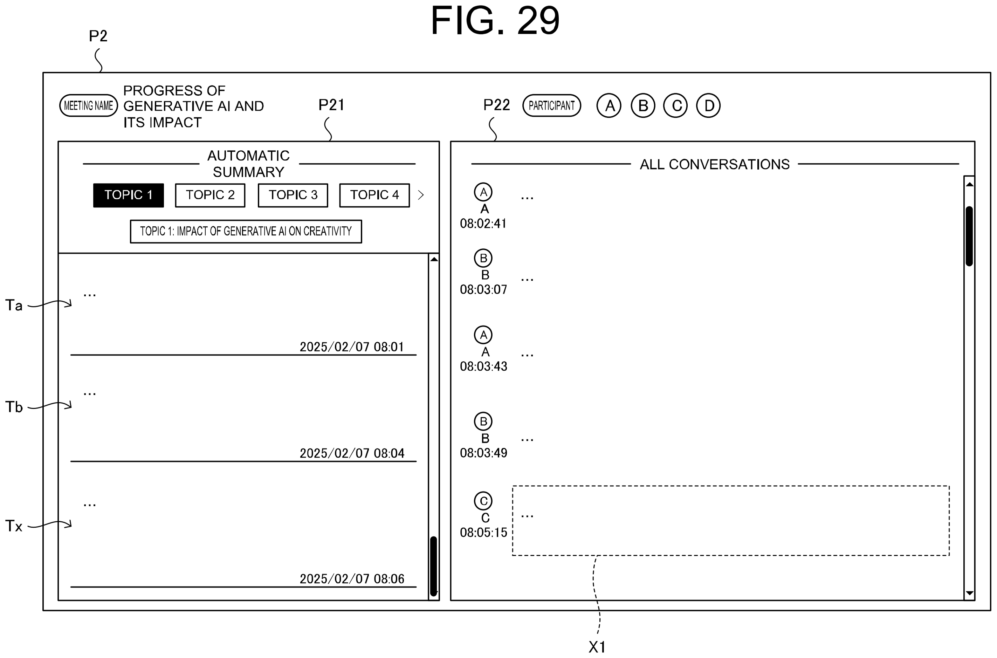

FIG. 29 illustrates a specific example of the meeting screen P2 according to the third example. When the utterance content (text information X1) uttered by user C at the end of Topic 1 is less than 1000 characters, the summary generation processing unit 114 generates a summary sentence Tx of the text information X1 by a prompt for short text. The summary generation processing unit 114 generates the summary sentence Tx at "08:06" after an utterance time "08:05:15" when user C uttered. The display processing unit 116 displays the summary sentence Tx generated at "08:06" following the summary sentence Tb generated at "08:04." User C's utterance content is reflected in the summary sentence Tx.

When the total number of characters of text information of the entire conversation of a topic is less than 1500 characters, the summary generation processing unit 114 may omit the generation process of a summary sentence similarly to the first example.

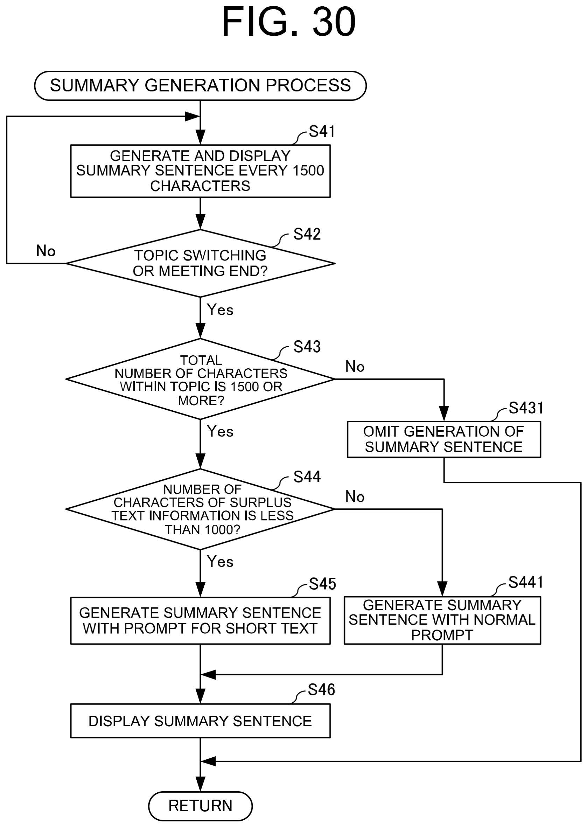

FIG. 30 illustrates an example of a procedure of a summary generation process according to the third example.

### Step S41

When a meeting starts, the controller 11 converts user's uttered voice into text information in step S41, and generates a summary sentence every time the number of characters of the text information reaches a predetermined number of characters (1500 characters). For example, the controller 11 gives an instruction to the summary generation engine to "summarize the following meeting conversation text" (normal prompt) to generate a summary sentence of surplus text information. On the meeting screen P2 (see FIG. 29), the controller 11 also displays the text information under conversation in the conversation display area P22 and displays the generated summary sentence in the summary display area P21.

### Step S42

In step S42, the controller 11 determines whether a topic has switched or whether the meeting has ended. For example, when a user presses a button of "Topic 2" on the setting screen P1 (see FIG. 7A) during a meeting of "Topic 1," the controller 11 determines that the topic has switched. When a user presses an "End" button on the setting screen P11 (see FIG. 7B) during a meeting, the controller 11 determines that the meeting has ended. When a topic switches or the meeting ends (S42: Yes), the controller 11 shifts the process to step S43. When a topic has not switched or the meeting has not ended (S42: No), the controller 11 repeats the process of step S41.

### Step S43

In step S43, the controller 11 determines whether the total number of characters of text information within a topic is 1500 characters or more. When the total number of characters is 1500 characters or more (S43: Yes), the controller 11 shifts the process to step S44. On the other hand, when the total number of characters is less than 1500 characters (S43: No), the controller 11 shifts the process to step S431.

### Step S44

In step S44, the controller 11 determines whether the number of characters of surplus text information when a topic switches or the meeting ends is less than 1000 characters. When the number of characters of the surplus text information is less than 1000 characters (S44: Yes), the controller 11 shifts the process to step S45. On the other hand, when the number of characters of the surplus text information is 1000 characters or more (S44: No), the controller 11 shifts the process to step S441.

### Step S45

In step S45, the controller 11 generates a summary sentence of the surplus text information by a prompt for short text. For example, the controller 11 gives an instruction to the summary generation engine to "extract only sentences considered to be important from the following meeting conversation text; if there are no important sentences, display nothing" to generate a summary sentence of the surplus text information.

### Step S441

In step S441, the controller 11 generates a summary sentence of the surplus text information by a normal prompt. For example, the controller 11 gives an instruction to the summary generation engine to "summarize the following meeting conversation text" to generate a summary sentence of the surplus text information.

### Step S46

In step S46, on the summary display area P21 of the meeting screen P2, the controller 11 displays the summary sentence generated based on the surplus text information. In the example shown in FIG. 28, when Topic 1 switches to Topic 2, the controller 11 displays the summary sentence c generated by a prompt for short text following the immediate summary sentence b. When the meeting ends, the controller 11 displays the summary sentence h generated by a prompt for short text following the immediate summary sentence g.

### Step S431

In step S431, the controller 11 omits the generation process of a summary sentence. In the example shown in FIG. 28, since the total number of characters of text information of "Topic 3" is 800 characters, the controller 11 does not generate a summary sentence of the text information and displays a message to the effect that a summary of "Topic 3" was not generated.

After steps S46 and S431, the controller 11 returns the process to step S41 and repeats the above-described process. When receiving a meeting end operation in step S42, the controller 11 ends the summary generation process after steps S46 and S431.

As described above, when the number of characters of the first text information converted from the first voice is less than the predetermined number of characters, the summary generation processing unit 114 according to the third example generates a summary sentence of the first text information (surplus text information) by a prompt for short text, and when the number of characters of the surplus text information is equal to or greater than the predetermined number of characters, generates a summary sentence of the surplus text information by a normal prompt. This makes it possible to generate a summary sentence appropriately reflecting utterance contents at the end of a meeting and at the time of switching a topic.

As another embodiment, the summary generation processing unit 114 may combine each summary generation process of the above-described first to third examples. For example, the controller 11 includes a first summary generation process according to the first example (see FIG. 22), a second summary generation process according to the second example (see FIG. 25), and a third summary generation process according to the third example (see FIG. 28), and the summary generation processing unit 114 may select and execute any of the first to third summary generation processes according to the number of characters of surplus text information. For example, the summary generation processing unit 114 executes the first summary generation process (see FIG. 22) when the number of characters of surplus text information is less than 200 characters, executes the second summary generation process (see FIG. 25) when the number of characters of surplus text information is 200 characters or more and less than 500 characters, and executes the third summary generation process (see FIG. 28) when the number of characters of surplus text information is 500 characters or more and less than 1000 characters.

As another embodiment, the summary generation processing unit 114 may select and execute any of the first to third summary generation processes based on a keyword included in the surplus text information, a degree of importance of the content of the surplus text information, and the like. The summary generation processing unit 114 may also select and execute the first summary generation process or the second summary generation process based on at least one of the number of characters, a keyword, and a degree of importance of the surplus text information.

As another embodiment, the summary generation processing unit 114 may execute a summary generation process selected by a user among the first summary generation process, the second summary generation process, and the third summary generation process.

In the above-described first to third examples, the summary generation processing unit 114 executes the summary generation process based on the number of characters (less than the predetermined number of characters) of the surplus text information at the end of a meeting or at the time of switching a topic, but as another embodiment, the summary generation processing unit 114 may execute the summary generation process based on a conversation time (surplus time) at the end of a meeting or at the time of switching a topic.

Specifically, the summary generation processing unit 114 generates a summary sentence of user's utterance content every predetermined time, and when a surplus time of a conversation at the end of a meeting or at the time of switching a topic is less than the predetermined time, generates a summary sentence corresponding to the first text information based on the first text information of the conversation and the second text information of the immediate utterance.

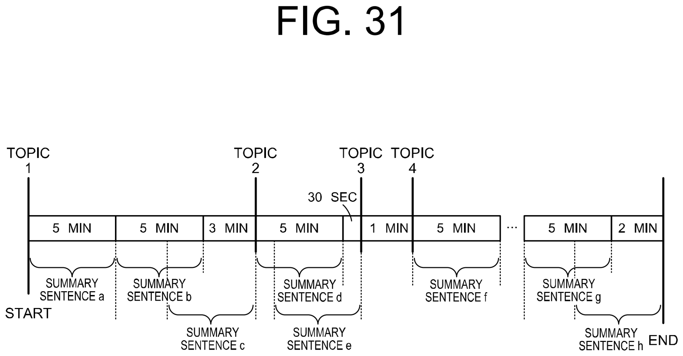

FIG. 31 illustrates an example in which "Number of characters" of the second summary generation process (see FIG. 25) is replaced with "Time." For example, the summary generation processing unit 114 generates a summary sentence every predetermined time (e.g., 5 minutes), and when an utterance time (surplus time) uttered by a user immediately before "Topic 1" ends is 3 minutes, the summary generation processing unit 114 generates a summary sentence c based on text information corresponding to 5 minutes obtained by combining text information for 2 minutes from the end of 5 minutes of utterance content immediately before the 3-minute utterance and 3-minute surplus text information.

When an utterance time (surplus time) uttered by a user immediately before "Topic 2" ends is 30 seconds, the summary generation processing unit 114 generates a summary sentence e based on text information corresponding to 5 minutes obtained by combining text information for 4 minutes 30 seconds from the end of 5 minutes of utterance content immediately before the 30-second utterance and 30-second surplus text information.

When an utterance time (surplus time) uttered by a user immediately before the meeting ends is 2 minutes, the summary generation processing unit 114 generates a summary sentence h based on text information corresponding to 5 minutes obtained by combining text information for 3 minutes from the end of 5 minutes of utterance content immediately before the 2-minute utterance and 2-minute surplus text information.

When the total time of utterance times of the entire conversation of a topic is less than 5 minutes, the summary generation processing unit 114 may omit the generation process of a summary sentence. In the example shown in FIG. 31, since the total time of utterance times of the entire conversation of "Topic 3" is 1 minute, the summary generation processing unit 114 omits the generation process of a summary sentence of "Topic 3." In this case, when a topic switches (e.g., when switches to "Topic 4"), the display processing unit 116 may display a message to the effect that a summary of "Topic 3" was not generated.

Also in the above configuration, it is possible to generate a summary sentence appropriately reflecting utterance contents at the end of a meeting and at the time of switching a topic. The same can be applied to the first and third summary generation processes.

In each of the above-described embodiments, an example in which meeting room R1 and meeting room R2 are connected via a network for an online meeting is shown, but the meeting support system 100 of the present disclosure may include only one meeting room R1. In this case, for example, in the meeting room R1, the meeting support apparatus 1 executes a transcription process for causing the display device 5 to display text information obtained by converting voice input to the microphone of the audio device 2. One audio device 2 (e.g., a stationary microphone-speaker device) may be installed in the meeting room R1, and the meeting support apparatus 1 may convert voice of one or more users input to the microphone of the audio device 2 into text information. That is, when the meeting support system 100 has a transcription function, a plurality of audio devices 2 may be arranged for each user, or one audio device 2 may be arranged for a meeting room or a plurality of users.

As another embodiment, the voice recognition processing may include a translation function of converting voice in a first language (e.g., Japanese) into text in a second language (e.g., English). The controller 11 may, for example, translate and display each of text information and a summary sentence, or may display text information in the conversation display area P22 in the language of the conversation without translation and translate only a summary sentence and display it in the summary display area P21. By adopting a configuration in which only a summary sentence is translated, it is possible to reduce time and cost spent for translation. The controller 11 may display a translation button capable of switching the translation function ON/OFF on the meeting screen P2.

The controller 11 of the meeting support apparatus 1 controls the entire meeting support apparatus 1. The controller 11 realizes various functions by reading and executing various programs stored in the storage unit 12 (e.g., a storage or a ROM). The controller 11 may be realized by one or more control devices/arithmetic devices (CPUs (Central Processors), SoCs (System on a Chip)). The controller 11 may also be configured by one or more control circuits (electronic circuits).

<Appendix of Disclosure> An overview of the disclosure extracted from the above-described embodiments will be appended below. Each configuration and each processing function described in the following appendix can be selected and arbitrarily combined.

(Appendix 1) An information processing system includes: an acquisition processing circuit that acquires a voice uttered by a user; a conversion processing circuit that converts the voice acquired by the acquisition processing circuit into text information; a generation processing circuit that generates, based on the text information converted by the conversion processing circuit, a summary sentence summarizing utterance contents of the user every first predetermined number of characters; and a display processing circuit that causes a display screen to display the summary sentence generated by the generation processing circuit, wherein the generation processing circuit generates, when the number of characters of first text information converted from a first voice is less than the first predetermined number of characters, a first summary sentence corresponding to the first text information based on the first text information and second text information converted from a second voice uttered before the first voice.

(Appendix 2) The information processing system according to Appendix 1, wherein the generation processing circuit generates the first summary sentence based on the first text information and the second text information when the number of characters of the first text information is less than a second predetermined number of characters that is fewer than the first predetermined number of characters, and generates the first summary sentence based on the first text information when the number of characters of the first text information is equal to or greater than the second predetermined number of characters and less than the first predetermined number of characters.

(Appendix 3) The information processing system according to Appendix 1 or 2, wherein the generation processing circuit generates the first summary sentence based on the first text information and all of the second text information when the number of characters of the first text information is less than the first predetermined number of characters.

(Appendix 4) The information processing system according to Appendix 3, wherein in a case where the first summary sentence is generated after a second summary sentence corresponding to the second text information has been displayed on the display screen, the display processing circuit deletes the second summary sentence and displays the first summary sentence on the display screen.

(Appendix 5) The information processing system according to Appendix 1, wherein the generation processing circuit generates the first summary sentence based on the first text information and part of the second text information when the number of characters of the first text information is less than the first predetermined number of characters.

(Appendix 6) The information processing system according to Appendix 5, wherein the generation processing circuit generates the first summary sentence based on the first text information and text information for the number of characters of a difference between the first predetermined number of characters and the number of characters of the first text information from the end in time series of utterance times among the second text information.

(Appendix 7) The information processing system according to any one of Appendices 1 to 6, wherein the generation processing circuit omits a generation process of the first summary sentence when a total number of characters of text information in one topic is less than the first predetermined number of characters.

(Appendix 8) The information processing system according to any one of Appendices 1 to 7, includes: a first summary generation process of generating the first summary sentence based on the first text information and all of the second text information when the number of characters of the first text information is less than the first predetermined number of characters; and a second summary generation process of generating the first summary sentence based on the first text information and part of the second text information when the number of characters of the first text information is less than the first predetermined number of characters, wherein the generation processing circuit selects and executes the first summary generation process or the second summary generation process based on at least one of the number of characters, a keyword, and a degree of importance of the first text information.

(Appendix 9) An information processing system includes: an acquisition processing circuit that acquires a voice uttered by a user; a conversion processing circuit that converts the voice acquired by the acquisition processing circuit into text information; a generation processing circuit that generates, based on the text information converted by the conversion processing circuit, a summary sentence summarizing utterance contents of the user every first predetermined number of characters; and a display processing circuit that causes a display screen to display the summary sentence generated by the generation processing circuit, wherein the information processing system includes: (1) a first summary generation process of generating, when the number of characters of first text information converted from a first voice is less than the first predetermined number of characters, a first summary sentence corresponding to the first text information based on the first text information and second text information converted from a second voice uttered before the first voice; and (2) a second summary generation process of generating, when the number of characters of the first text information is less than the first predetermined number of characters, the first summary sentence using a summary generation model that is different from a summary generation model corresponding to the first predetermined number of characters; and the generation processing circuit selects and executes the first summary generation process or the second summary generation process based on at least one of the number of characters, a keyword, and a degree of importance of the first text information.

(Appendix 10) An information processing system includes: an acquisition processing circuit that acquires a voice uttered by a user; a conversion processing circuit that converts the voice acquired by the acquisition processing circuit into text information; a generation processing circuit that generates, based on the text information converted by the conversion processing circuit, a summary sentence summarizing utterance contents of the user every predetermined time; and a display processing circuit that causes a display screen to display the summary sentence generated by the generation processing circuit, wherein the generation processing circuit generates, when an utterance time of a first voice is less than the predetermined time, a summary sentence corresponding to first text information of the utterance time based on the first text information and second text information converted from a second voice uttered before the first voice.

(Appendix 11) An information processing method in which one or more processors execute: acquiring a voice uttered by a user; converting the voice into text information; generating, based on the text information, a summary sentence summarizing utterance contents of the user every first predetermined number of characters; causing a display screen to display the summary sentence; and generating, when the number of characters of first text information converted from a first voice is less than the first predetermined number of characters, a first summary sentence corresponding to the first text information based on the first text information and second text information converted from a second voice uttered before the first voice.

(Appendix 12) An information processing program or a non-transitory information processing program storing the information processing program for causing one or more processors to execute: acquiring a voice uttered by a user; converting the voice into text information; generating, based on the text information, a summary sentence summarizing utterance contents of the user every first predetermined number of characters; causing a display screen to display the summary sentence; and generating, when the number of characters of first text information converted from a first voice is less than the first predetermined number of characters, a first summary sentence corresponding to the first text information based on the first text information and second text information converted from a second voice uttered before the first voice.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An information processing system (100) comprising:
an acquisition processing circuit (112) that acquires a voice uttered by a user;
a conversion processing circuit (113) that converts the voice acquired by the acquisition processing circuit (112) into text information;
a generation processing circuit (114) that generates, based on the text information converted by the conversion processing circuit (113), a summary sentence summarizing utterance contents of the user every first predetermined number of characters; and
a display processing circuit (116) that causes a display screen to display the summary sentence generated by the generation processing circuit (114),
wherein the generation processing circuit (114) generates, when the number of characters of first text information converted from a first voice is less than the first predetermined number of characters, a first summary sentence corresponding to the first text information based on the first text information and second text information converted from a second voice uttered before the first voice.

2. The information processing system (100) according to claim 1, wherein the generation processing circuit (114) generates the first summary sentence based on the first text information and the second text information when the number of characters of the first text information is less than a second predetermined number of characters that is fewer than the first predetermined number of characters, and generates the first summary sentence based on the first text information when the number of characters of the first text information is equal to or greater than the second predetermined number of characters and less than the first predetermined number of characters.

3. The information processing system (100) according to claim 1 or 2, wherein the generation processing circuit (114) generates the first summary sentence based on the first text information and all of the second text information when the number of characters of the first text information is less than the first predetermined number of characters.

4. The information processing system (100) according to claim 3, in a case where the first summary sentence is generated after a second summary sentence corresponding to the second text information has been displayed on the display screen, the display processing circuit (116) deletes the second summary sentence and displays the first summary sentence on the display screen.

5. The information processing system (100) according to claim 1, wherein the generation processing circuit (114) generates the first summary sentence based on the first text information and part of the second text information when the number of characters of the first text information is less than the first predetermined number of characters.

6. The information processing system (100) according to claim 5, wherein the generation processing circuit (114) generates the first summary sentence based on the first text information and text information for the number of characters of a difference between the first predetermined number of characters and the number of characters of the first text information from the end in time series of utterance times among the second text information.

7. The information processing system (100) according to any one of claims 1 to 6, wherein the generation processing circuit (114) omits a generation process of the first summary sentence when a total number of characters of text information in one topic is less than the first predetermined number of characters.

8. The information processing system (100) according to any one of claims 1 to 7, including:
a first summary generation process of generating the first summary sentence based on the first text information and all of the second text information when the number of characters of the first text information is less than the first predetermined number of characters; and
a second summary generation process of generating the first summary sentence based on the first text information and part of the second text information when the number of characters of the first text information is less than the first predetermined number of characters,
wherein the generation processing circuit (114) selects and executes the first summary generation process or the second summary generation process based on at least one of the number of characters, a keyword, and a degree of importance of the first text information.

9. An information processing system (100) comprising:
an acquisition processing circuit (112) that acquires a voice uttered by a user;
a conversion processing circuit (113) that converts the voice acquired by the acquisition processing circuit (112) into text information;
a generation processing circuit (114) that generates, based on the text information converted by the conversion processing circuit (113), a summary sentence summarizing utterance contents of the user every first predetermined number of characters; and
a display processing circuit (116) that causes a display screen to display the summary sentence generated by the generation processing circuit (114),
wherein the information processing system includes: a first summary generation process of generating, when the number of characters of first text information converted from a first voice is less than the first predetermined number of characters, a first summary sentence corresponding to the first text information based on the first text information and second text information converted from a second voice uttered before the first voice; and a second summary generation process of generating, when the number of characters of the first text information is less than the first predetermined number of characters, the first summary sentence using a summary generation model that is different from a summary generation model corresponding to the first predetermined number of characters; and
the generation processing circuit (114) selects and executes the first summary generation process or the second summary generation process based on at least one of the number of characters, a keyword, and a degree of importance of the first text information.

10. An information processing system (100) comprising:
an acquisition processing circuit (112) that acquires a voice uttered by a user;
a conversion processing circuit (113) that converts the voice acquired by the acquisition processing circuit (112) into text information;
a generation processing circuit (114) that generates, based on the text information converted by the conversion processing circuit (113), a summary sentence summarizing utterance contents of the user every predetermined time; and
a display processing circuit (116) that causes a display screen to display the summary sentence generated by the generation processing circuit (114),
wherein the generation processing circuit (114) generates, when an utterance time of a first voice is less than the predetermined time, a summary sentence corresponding to first text information of the utterance time based on the first text information and second text information converted from a second voice uttered before the first voice.

11. An information processing method executed by one or more processors, the information processing method comprising:
acquiring a voice uttered by a user;
converting the voice into text information;
generating, based on the text information, a summary sentence summarizing utterance contents of the user every first predetermined number of characters;
causing a display screen to display the summary sentence; and
generating, when the number of characters of first text information converted from a first voice is less than the first predetermined number of characters, a first summary sentence corresponding to the first text information based on the first text information and second text information converted from a second voice uttered before the first voice.

12. An information processing program that causes one or more processors to execute:
acquiring a voice uttered by a user;
converting the voice into text information;
generating, based on the text information, a summary sentence summarizing utterance contents of the user every first predetermined number of characters;
causing a display screen to display the summary sentence; and
generating, when the number of characters of first text information converted from a first voice is less than the first predetermined number of characters, a first summary sentence corresponding to the first text information based on the first text information and second text information converted from a second voice uttered before the first voice.
